(19) Europäisches Patentamt

European Patent Office

Office européen des brevets

(11) **EP 0 979 850 B1**

(12) **EUROPEAN PATENT SPECIFICATION**

(45) Date of publication and mention
of the grant of the patent:
**19.05.2004 Bulletin 2004/21**

(51) Int Cl.[7]: **C09D 7/00**, C09D 5/02

(21) Application number: **98115111.1**

(22) Date of filing: **11.08.1998**

(54) **Use of aqueous protective coating compositions for industrial coatings and aqueous coating compositions**

Verwendung von wässrigen Schutzschichtzusammensetzungen für Industrielle Beschichtungen und wässrige Beschichtungszusammensetzungen

Utilisation de compositions de revêtement protecteur pour des revêtements industriels et compositions aqueuses de revêtement

(84) Designated Contracting States:
**AT BE CH DE DK ES FI FR GB IE IT LI NL PT SE**

(43) Date of publication of application:
**16.02.2000 Bulletin 2000/07**

(73) Proprietor: **HERCULES INCORPORATED
Wilmington Delaware 19894-0001 (US)**

(72) Inventor: **Kroon, Gijsbert
3371 BW Hardinxveld-Giessendam (NL)**

(74) Representative: **Best, Michael, Dr. et al
Lederer & Keller
Patentanwälte
Prinzregentenstrasse 16
80538 München (DE)**

(56) References cited:
**EP-A- 0 339 712         WO-A-97/21743**

**Description**

The invention relates to the use of specific aqueous protective coating compositions containing a combination of associative thickeners for industrial coatings and to some specific aqueous protective coating compositions.

Associative thickeners and aqueous coating compositions containing such associative thickeners are well known in the prior art. In this respect, it can be referred to a number of documents e.g. EP-A 566 911, EP-A 339 712, EP-A 138 614, EP-A 426 086, EP-A 465 992, EP-A 471 866, CA-20 23 058, DE-A 30 04 161, EP-A 376 196, EP-A 384 167, US-A 4,902,733, EP-A 444 791, DE-A 42 24 617, EP-A 396 576, WO 94/06840 and EP-A 350 414. EP-A 339 712 for example discloses the preparation of flat and/or semi-flat water paints which comprise a water soluble non-ionic cellulose ether and an assoziative polyurethane thickener.
WO 97/21743 discloses a combination of a urethane compound which is effective as an associative thickener with specific non-urethane compounds. However, while most of these documents refer to the industrial applicability of the disclosed protective coatings, this "industrial applicability" is restricted to applying the coatings by rollers or brushes mainly in the architectural field for buildings and indoor uses etc.. Contrary thereto, the term "industrial coatings" as used herein refers to coatings which are applied by industrial methods as defined below.

It is extensively discussed in the prior art, e.g. in WO 94/06840, that traditional thickeners such as cellulose derivatives and polyacrylate provide insufficient levelling in water based paints. So, it was believed that many of the water soluble polymers like carbohydrates and synthetic associative thickeners disclosed in the prior art cannot be practically used for the application of water based paints by industrial methods such as spraying techniques like conventional air spray, high volume low pressure techniques and airless spray techniques. By applying the prior art coatings by such industrial methods, many associative thickeners have a negative influence on sprayability, film formation of the binder, smoothness of the coating film, water resistance and film gloss, which do not occur when applying these coatings by brushes, rollers etc.

Application by industrial methods becomes even more problematic due to the development of new binder systems with very fine particle sizes of less than about 700 nm, in particular less than about 200 nm down to about 50 nm.

The prior art tried to overcome this problem by the development of polyurethane thickeners as described e. g. in WO 94/06840 and in practice all known aqueous protective coating compositions comprising binder systems with very small particle sizes (which are used for application by industrial methods) are based on polyurethane type thickeners.

Therefore, there is a problem in the prior art that, with the exception of polyurethane type thickeners, there is no reliable way of providing aqueous coating compositions which can be used for the application by industrial methods. Prior to the present invention, it was believed that an aqueous protective coating composition containing conventional thickeners cannot provide satisfactory results when applied by industrial methods such as conventional air spray techniques, high volume low pressure techniques and airless spray techniques, even if this composition showed good results when applied by brushes or rollers.

EP-A 867 481 discloses aqueous protective coating compositions which can be applied by industrial methods.

Unexpectedly, it was found in the present invention that the above-mentioned problem can be solved by using an aqueous protective coating composition for application by industrial methods containing a binder system and a combination of associative thickeners, which is characterized in that at least one of the associative thickeners which is present in the combination of associative thickeners is not a polyurethane thickener and that the combination of associative thickeners is selected so that the concentration C of associative thickeners required by the specific application method (e.g. required to spray viscosity) is below the critical concentration C* at which the coils of the thickener polymers start to overlap or entangle, whereby the concentration C of the associative thickener combination is defined as

$$C = \sum_i (W_i \times C_i)$$

with

$C_i =$ concentration of associative thickener i and
$W_i =$ weight fraction of associative thickener i in the associative thickener combination

and the critical concentration C* of the associative thickener combination is defined as

$$C^* = \sum_i (W_i \times C_i^*)$$

with

$C_i^* = $ critical concentration of associative thickener i and

$W_i = $ weight fraction of associative thickener i in the associative thickener combination,

and whereby each $C_i^*$ can be calculated according to the Mark Houwink equation for the associative thickener i:

$$C_i^* = \frac{2.5}{[\eta]}$$

$$\Phi * <h^2>_h^{3/2} = [\eta] * M_v = K * M_v^{\alpha+1}$$

$$R_G = \left(\frac{<h^2>_h}{6}\right)^{\frac{1}{2}}$$

wherein $[\eta]$ is the limiting viscosity number

$\Phi$ and K are proportionality constants

$<h^2>_h$ is the hydrodynamic equivalent mean square end to end distance of the polymer molecule

$M_v$ is the viscosity average molecular weight of the thickener

$\alpha$ is a constant and

$R_G$ is the radius of gyration.

With the proviso that if one or more polyurethane thickeners are present in the combination of associative thickeners, the total amount of polyurethan thickeners is not more than 90% based on the weight of the combination of associative thickeners.

In an embodiment, the use of a composition is preferred wherein the binder system of the coating composition has partical sizes of about 700 nm or less, of about 200 nm or less or of about 100 nm or less.

The present invention furthermore provides aqueous protective coating compositions having a viscosity which allows their application by industrial methods containing a combination of associative thickeners and a binder system, wherein the binder system has a particle size of 50 to 700 nm (preferably 50 to 200 nm) and in which at least one associative thickener of the combination of associative thickeners is not a polyurethane thickener and the combination of associative thickeners is present in a concentration below C* as defined above.

In order to use an aqueous coating composition for application by industrial methods, it is necessary that its viscosity is adjusted to meet the requirements of the application apparatus, e.g. the spray gun used. For different spray techniques different viscosities are required. For high volume low pressure techniques the required viscosity is in the order of 40 sec. DIN 4 (sometimes even higher viscosities, such as 60 sec. DIN 4 are required), for airless spray techniques much higher viscosities are required. For airless spraying the paint generally has a viscosity in the range of 2000 to 10000 mPas, such as a Brookfield viscosity of 3000 to 4500 mPas, 8000 to 9000 mPas or a Stormer viscosity of about 95 Krebs Units. Which viscosities are required for which techniques and how the viscosities can be determined is explicitly discussed in Ernest W. Flick "Water-based Paint Formulations Vol. 3", Noyes Publications, Park Ridge, New Jersey, USA, 1994. It can additionally be referred to the publicly available product literature of the manufaturers of application apparatus, such as the product literature on spray guns by ECCO or of companies such as Zeneca Resins, Waalwik, The Netherlands, which published the required viscosity for industrially applicable paints, e.g. in a product leaflet concerning the formulation JY137. How the viscosity of a paint formulation is measured is additionally within the general technical knowledge of a skilled person.

According to EP-A 867 481 an aqueous protective coating composition can be used for application by industrial methods, if the concentration of the thickener is below C* and preferably below $C_{i\,p}^* = C_i^*/2.5 = 1/[\eta]$. According to EP-A 867 481 a thickener has to be selected which at a concentration in the aqueous' protective coating composition which is below $C_i^*$, preferably below $C_{i\,p}^*$, nevertheless provides the viscosity as required by the specific application method. How a specific thickener can be manipulated to provide a higher viscosity at lower concentrations is principally known to a skilled person and explained in some detail in the above application and below.

However, EP-A 867 481 focuses on aqueous protective coating compositions comprising one associative thickener. Contrary thereto, according to the present invention the aqueous protective coating composition comprises a combination of at least two associative thickeners. At least one associative thickener is different from a polyurethane thickener, however, a polyurethane thickener can be present in the combination of associative thickeners. If one or more polyurethane thickeners are present in the combination of associative thickeners according to the invention, the total amount of polyurethane thickeners is generally not more than 90%, preferably not more than 80%, preferably not more than 60% and most preferably about 50% based on the weight of the combination of associative thickeners.

In the combination of associative thickeners of the present invention each associative thickener is preferably present in an amount of at least 10%, preferably 20% based on the weight of the combination of associative thickeners. Most preferred is a combination of two associative thickeners, which are each present in an amount of 60 to 40 wt.-% and 40 to 60 wt.-%, respectively, particularly preferred in an amount of about 50 wt.-% each.

It was unexpectedly found that the content of associative thickener present in the composition of EP-A 867 481 can be significally reduced, if not one associative thickener is employed as disclosed therein but if a combination of associative thickeners is used as claimed in the present invention.

Similar as in EP-A 867 481 according to the present invention an aqueous protective coating composition can be used for application by industrial methods if the concentration of the combination of thickener is below C* and preferably below

$$C_i{}^*{}_p = \sum_i W_i \times C_i{}^*{}_p$$

wherein $W_i$ is a weight fraction of the associative thickener i and

$$C_i{}^*{}_p \text{ is } C_i{}^*/2.5 = 1/[\eta].$$

Therefore, a combination of associative thickeners has to be selected which at a concentration in the aqueous protective coating composition which is below C*, preferably below C*$_p$, nevertheless provides the viscosity as required by the specific application method. How the associative thickeners of the combination of associative thickeners can be selected and manipulated to provide a higher viscosity at lower concentrations is principally known to a skilled person and explained in EP-A 867 481 and in some detail below.

It was unexpectedly found that by using the aqueous protective coating compositions as defined above for industrial coatings, the binder particles do not flocculate and that such compositions will provide industrial coatings with high gloss, good flow, good sprayability, water resistance, corrosion resistance and blistering resistance. Such compositions can preferably be used as coatings for protection of transport vehicles referred to as Transport Original Equipment Manufacturing (OEM), car refinish, general industrial coatings, anti corrosion coatings, maintenance coatings and wood coatings. The substrates can be metal, wood and plastic. The coating can be a primer, intermediate coat or top coat. The coatings are applied to the substrates in a wide variety of known application techniques. Among these are spraying techniques like conventional air spray, HVLP (high volume low pressure) and airless spray. The binder systems used as a basis for the waterborne coatings vary between binder dispersions, emulsions and two pack systems. Chemically they can be, among others, acrylic, modified acrylic, alkyd based, urethanes, urethane-acrylics, epoxies, epoxy esters etc. Latex paints are particularly preferred.

According to the present invention, the thickeners do not need to be selected by their chemistry, only by the particle size and weight fractions of binder and/or pigment and water. For a given coating system comprising a latex (dispersion of solid binder particles in water) the maximum concentration of the combination of associative thickeners can be calculated as follows.

Since the particle size of the binder and pigment as well as the composition of the (simplified) coating systems are known, one can easily calculate the average layer thickness of water that is surrounding the dispersed components (binder, pigment). In these calculations, the pigment and binder particles are usually assumed to be spherical. How such a calculation can be done is well known to a skilled person and particularly explained for a specific example below. According to the invention, it was unexpectedly found that the thickener molecules will not flocculate the binder or pigment particles if the hydrodynamic diameter of the coil of the water soluble polymers (= thickener/rheology modifier) does not exceed the diameter of the layer thickness of the continuous phase.

The hydrodynamic volume ($V_h$) of a thickener coil in solution is defined to be the mean square root of the radius of gyration ($<R_G{}^2>$) to the power of 3/2.

For determining the optimum concentration of the combination of associative thickeners, one needs to know the so called Mark Houwink equation for the basic polymer of each associative which is present in the combination of associative thickeners. The Mark Houwink equation as well as the relationship between the radius of gyration, the hydrodynamic equivalent mean square end to end distance of the polymer molecule and the viscosity average molecular weight are disclosed in various standard text books e.g. in D.W. van Krevelen, Properties of Polymers, Elsevier Scientific Publishing Company, Amsterdam-Oxford-New York, 1976, H. Elias, Macromolecules 1 & 2, John Wiley & Sons, S. Sun, Physical Chemistry of Macromolecules, John Wiley & Sons or Polymer Handbook. In the prior art, the Mark Houwink equation is generally used to determine the viscosity averaged molecular weight of a polymer from the (measured) limiting viscosity number. It is assumed that the Mark Houwink equation does not change dramatically due to the modification of the basic polymer with hydrophobic groups, as is disclosed e.g. in Robert A. Gelman and Howard G. Barth, "Viscosity Studies of Hydrophobically Modified (Hydroxyethyl) Cellulose" in ACS Conference book on Water Soluble Polymers, 1986, Chapter 6, pages 101 to 110. The hydrophobic groups usually represent less than 5 wt % of the total thickener and the coil volume of the modified polymer is equal or smaller in size than that of the non-modified polymer.

From the following equations

$$C^* = \sum_i W_i \ x \ C_i^*$$

$$C^* = \frac{2.5}{[\eta]}$$

$$\Phi * <h^2>_h^{3/2} = [\eta] * M_v = K * M_v^{\alpha+1}$$

$$R_G = \left( \frac{<h^2>_h}{6} \right)^{\frac{1}{2}}$$

which are disclosed e.g. in the above reference books, for a given associative thickener polymer the maximum possible viscosity average molecular weight can be determined by using the maximum value of the radius of gyration calculated as discussed above. Values of $\Phi$, K and $\alpha$ for various polymers are disclosed e.g. in the Polymer Handbook for synthetic polymers and in R. Lapasin and S. Pricl, Rheology of Industrial Polysacharides - Theory and Applications, Blackie Academic & Professional, Chapman and Hall for carbohydrate based polymers. Other standard books disclosing these constants are known to a skilled person.

Knowing the viscosity average molecular weight, the limiting viscosity number $[\eta]$ can be calculated and, thus, the reciprocal value of the limiting viscosity number is correlated to the thickener concentration at which the coils start to overlap or entangle. By selecting the thickener concentration in the continuous phase below this critical concentration, it is ensured that the continuous phase will behave as a liquid while elastic properties will start to show up beyond this critical polymer concentration. Therefore, the use level of the thickener molecule should remain below this level to make sure that the system will flow well.

The associative thickeners which can be used according to the invention can be carbohydrate based thickeners (natural thickeners) or synthetic thickeners. Preferred are the carbohydrate based thickeners such as modified cellulose ethers. Preferred are associative thickeners comprising as a basic polymer hydroxyethyl cellulose, hydroxypropyl cellulose, methyl cellulose, polyethyleneoxide, ethylhydroxylethyl cellulose, carboxymethyl cellulose, guar gum, starch, starch ethers, particularly hydroxyethyl starch, locust bean gum, pectin, xanthan gum, methylhydroxyethyl cellulose, polyvinylpyrolidone, polyvinyl alcohol, methylhydroxypropyl cellulose, mixed ethers of the above cellulose derivatives and mixtures thereof. Especially preferred are hydrophobically modified hydroxyethyl cellulose, hydrophobically modified methylhydroxyethyl cellulose, hydrophobically modified hydroxypropyl cellulose, hydrophobically modified polyethyleneglycols, particularly hydrophobe end-capped polyethyleneglycols. Preferred are dodecyl- and cetyl-modified polymers, e.g. polyethyleneoxides. Preferred thickeners are disclosed e.g. in EP-A 566 911 and US-A 5 574 127.

Furthermore, starch and its derivatives are associative thickeners which can advantageously be used according to the invention.

Particularly preferred are combinations of associative thickeners which contain two associative thickeners and in particular combinations of two hydrophobically modified cellulose ethers such as the cellulose ethers disclosed in EP-A 566 911, combinations containing one hydrophobically modified cellulose ether, preferably a hydrophobically modified cellulose ether as disclosed in EP-A 566 911 and a polyurethane-type thickener, combinations containing a hydrophobically modified cellulose ether, particularly a hydrophobically modified cellulose ether disclosed in EP-A 566 911 in combination with a hydrophobically modified polyethylene glycol and combinations of a hydrophobically modified polyethylene glycol and a polyurethane-type thickener. The term "hydrophobically modified polyethylene glycol" as used herein should particularly encompass hydrophobically modified poly(acetal-polyethers) as disclosed in US-A 5,574,127 and in particular $C_{10}$- to $C_{20}$-alkyl modified poly(acetal-polyethers). For the calculation of the critical concentration the Mark Houwink equation for polyethylene oxide backbone can be used.

The present invention is particularly useful for coating compositions comprising new binder systems with very fine particle sizes down to 50 nm, preferably between 200 nm and 50 nm. As is evident from the calculations shown below, the critical concentration for compositions having large particles of well above 200 nm is quite high and, thus, such compositions are not so likely to flocculate when applied by industrial methods. Particularly preferred are coating compositions with very fine particle sizes of below 100 nm and those having particle sizes of about 50 nm or above. The. particle size of the latexes referred to in this specification is as measured by a Disk Centrifuge of the type Joyce Loebl.

In the following, the invention will be explained in some detail for two typical coating compositions. The invention is not restricted thereto.

As typical coating system 1 a latex can be mentioned with an average particle size of 50 nm and a solids content of 50 wt-%. A further typical coating system is system 2 which is a coating system represented by 60 wt-% latex (200 nm particle size), 20% pigment (1000 nm particle size) and 20% additional water. The latex has a solids content of 50% w/w, which makes as a solids content of the paint 50 wt-% as in the system 1 defined above.

The layer thickness of water around the binder particles can then be calculated for system 1 to be 10 nm and for system 2 to be 60 nm. The calculation of the layer thickness for system 1 is now explained in detail. However, how such a calculation can be done is well within the knowledge of a skilled person.

In system 1 there is a solids content of 50% and the particle size is 50 nm. Per 100 g of the coating therefore 0.050 kg of solid latex particles are present. The specific gravity of the latex particles is known and for the purpose of this calculation it can be assumed to be $\rho$ = 1100 kg/m$^3$. Since the particles are assumed to be spherical, each particle has a volume of V = (4/3) $\pi$ R$^3$. The surface area of each latex particle is O = 4 $\pi$ R$^2$. The weight of the particle is $\rho$V. The number of particles thus follows from the total weight of the solid latex particles and the weight of one particle and is N = 0.050 / ($\rho$V). The total surface area of the latex particle calculates to (number of particles x surface area of one particle = N x O). 50 g of water which are present in the system equal 50 ml or 50 x 10$^{-6}$ m$^3$. The layer thickness of the liquid on the latex particles can then be calculated to be L = 50 x 10$^{-6}$ / (N x O). Using the concrete numbers for system 1, it follows:

$$N = 0.050 / 1100 \times (4/3) \ \pi \ (25 \times 10^{-9})^3 = 6.945 \times 10^{17}$$

particles,

$$O = 4 \ \pi \ (25 \times 10^{-9})^2 = 7.854 \times 10^{-15} \ m^2$$

$\Rightarrow$ L = 9.17 x 10$^{-9}$ m corresponding to approximately 10 nm as disclosed above.

Following the calculations as explained above, the layer thickness for any system can be easily calculated.

In order to make sure that the thickener molecule will not flocculate the binder or pigment particles, the hydrodynamic diameter of the coil of the water soluble polymer (= thickener/rheology modifier) should not exceed the diameter of the layer thickness of this continuous phase. Therefore, the radius of gyration of these thickener coils should not exceed 5 nm for system 1 and not exceed 30 nm for system 2. The hydrodynamic volume ($V_h$) of the corresponding thickener coils in solution can then be calculated for system 1 to be $V_h$ = 1.25 x 10$^{-19}$ cm$^3$ and for system 2 to be $V_h$ = 2.76 x 10$^{-17}$ cm$^3$.

Introducing the values for the radius of gyration into the Mark Houwink equation for an individual associative thickener, the viscosity average molecular weight for this thickener can be calculated and knowing the viscosity average molecular weight, the limiting viscosity number [$\eta$] and the critical concentration $C_i^*$ for the associative thickener can be determined. In particular, by taking the reciprocal value of the limiting viscosity number, the thickener concentration can be determined at which the coils start to overlap or entangle. The Mark Houwink equation, the viscosity average molecular weight range calculated for systems 1 and 2 and the preferred critical concentration $C_{i\ p}^*$ range calculated are summarized in the following table for a broad range of basic water soluble polymers.

| Basic Polymer | Mark Houwink equation ([η] in l/g) | $M_v$ - range | $C_{i\ p}^*$ range [wt %] ($C_i^*/2.5 = 1/[\eta]$) |
|---|---|---|---|
| Hydroxyethyl cellulose | [η]=12.55*10^-6*M^0.81 | 3100-60500 | 1.07-11.8 |
| Hydroxypropyl cellulose | [η]=0.41*10^-6*M^1.06 | 6100-83700 | 1.48-23.7 |
| Methyl cellulose | [η]=316*10^-6*M^0.55 | 1500-48000 | 0.84-5.67 |
| Polyethylene oxide | [η]=218.5*10^-6*M^0.48 | 2700-102300 | 1.80-10.3 |
| Ethylhydroxy ethylcellulose | [η]=37*10^-6*M^0.80 | 1800-36000 | 0.61-4.9 |
| Carboxymethyl cellulose | [η]=7.2*10^-6*M^0.95 | 2300-37000 | 0.63-8.9 |
| Guar gum | [η]=0.78*10^-6*M^0.98 | 6400-96000 | 1.69-24.0 |
| Hydroxyethyl starch | [η]=291*10^-6*M^0.35 | 4700-251000 | 4.4-17.8 |
| Locust Bean Gum | [η]=8.02*10^-6*M^0.79 | 4400-88000 | 1.55-16.5 |
| Pectin | [η]=21.6*10^-6*M^0.79 | 2500-51000 | 0.88-9.6 |
| Xanthan Gum | [η]=17*10^-6*M^1.32 | 450-4800 | 0.08-1.85 |
| Methylhydroxy ethylcellulose | [η]=147*10^-6*M^0.70 | 1200-30000 | 0.50-4.8 |
| Polyvinyl pyrolidone | [η]=67.6*10^-6*M^0.55 | 4000-129500 | 2.28-15.4 |
| Polyvinyl alcohol | [η]=140*10^-6*M^0.60 | 2000-57000 | 1.00-7.5 |

The Mark Houwink equation and correspondingly the values for the viscosity molecular weight and for $C_{i\ p}^*$ for polyurethane thickeners roughly correspond to the corresponding values for polyethylene glycol (polyethylene oxide as cited in the above table) since the polymer backbone indeed is polyethylene glycol, while the hydrophobes are linked via an isocyanate route yielding an urethane group. This does not have a significant impact on the constants of the Mark Houwink equation and correspondingly on the viscosity average molecular weight range and the $C_{i\ p}^*$ range.

In order to make sure that the continuous phase containing the thickener molecules will behave as a viscous liquid, the thickener content should remain below the critical polymer concentration $C \leq C^*$ (preferably $C_p^*$) or

$$\sum_i W_i\, C_i \leq \sum_i W_i\, C_i^* \ (\text{preferably} \ \sum_i W_i\, C_{i\ p}^* \,).$$

For example, it shall be assumed that the combination of associative thickeners contains 50% of a hydrophobically modified methyl cellulose and 50% of a hydrophobically modified hydroxyethyl cellulose. For this combination of associative thickeners the critical concentration $C_p^*$ for the more critical system 1 is

$$C_p^* = 0.5*\,1.07 + 0.5*\,0.84 = 0.96 \text{ wt-\%}$$

and for the more forgiving system 2 is

$$C_p^* = 0.5*\,11.8 + 0.5*\,5.67 = 8.74 \text{ wt-\%}.$$

Following the above example, $C_p^*$ can easily be evaluated for each system and for each intended combination of thickeners.

The hydrophobe content and type of modification of one or more associative thickener of the combination of associative thickeners can be adjusted as required to reduce the concentration of the associative thickener in the aqueous protective coating composition below $C^*$ or preferably $C^*p$ while nevertheless the combination of associative thickeners provides a viscosity which is sufficiently high to meet the requirements of the envisaged industrial applicability, e.g. the viscosity which is required to meet the 40 sec. DIN Cup 4. The hydrophobe types suitable for this purpose are alkyl and alkyl aryl groups ranging from C8-C24 carbon atoms in the alkyl group. The hydrophobe modification can range from 0.4 wt-% up to 5 wt-% or until material becomes insoluble in water. The amount of hydrophobe needed depends on the strength of the interaction between the binder and the thickener and needs to be checked in the final coating system. In practice, the required range of hydrophobe contents is estimated to be between 0.5 wt % and 4.0 wt %. It is known that increasing the hydrophobe content yields an increased thickening efficiency, e.g. G. Kroon, "Associative Behaviour of Hydrophobically Modified Hydroxyethyl Cellulose (HMHEC's) in Waterborne Coatings" in Progress in Organic Coatings, 22, 1993, Elsevier Sequoia pages 245 to 260 or EP-A 566 911.

Alternatively (or additionally), the composition of the combination of associative thickeners can be modified, e.g. by changing the relative amounts of the associative thickeners which are present in the combination of associative thickeners.

The following examples and reference examples further describe the invention.

The reference examples do not employ a combination of associative thickeners but only one associate thickener. These reference examples are intended to show that indeed the critical concentration of an associative thickener is a decisive feature for developing an aqueous coating composition which can be applied by industrial means. In the examples. combinations of associative thickeners are employed, showing that aqueous coating compositions containing such combinations of associative thickeners can advantageously be applied by industrial means.

In the following examples and reference examples, in table 2a the value of $C^*_p$ refers to a <u>polymer solution</u>, whereas in table 2b and in the further tables of the examples and reference examples the concentrations indicated refer to the total paint which contains only a certain percentage of solids. If nothing else is stated, the solids content of the tested paints is 50%. Therefore, to decide whether or not any of the disclosed compositions contains a concentration of associative thickeners which is below $C^*$ (or $C^*_i$), the concentration has to be adapted to a polymer solution. For example, the concentrations given in table 2b (50% solids content) have to be multiplied by 2 and then compared to the value of $C^*_p$ indicated in table 2a. A corresponding calculation has to be carried out with respect to the other tables.

The concentration of the associative thickeners in the tested aqueous protective coating compositions was adjusted to meet the viscosity according to 40 sec. DIN 4 or as discussed in Ernest W. Flick, "Water-based Paint Formulations Vol. 3", Noyes Publications, Pack Ridge, New Jersey, USA, 1994. This viscosity of the coating compositions was necessary to apply the compositions with the spray guns used in the reference examples. Furthermore, some applications and specific substrates required a higher viscosity (such as 60 sec. DIN 4), nevertheless, the corresponding paints could still be applied with the spray guns.

## Examples and Reference Examples

The first reference example shows the performance of a number of hydrophobically modified hydroxyethyl celluloses with variable molecular weight and hydrophobe type and -content in an anti-corrosion paint based on a styrene acrylic latex (formulation: see Table 1).

Table 1

| Anti-corrosion primer formulation for air- and HVLP-spray application | |
| --- | --- |
| | **Parts by weight** |
| Water | 83.4 |
| Thickener | variable to 40 sec. DIN Cup 4 |
| Styrene acrylic latex | 150.0 |
| Dispersant | 4.5 |
| Preservative | 3.5 |
| Co-solvent | 31.5 |
| Defoamer | 0.5 |
| $TiO_2$ | 100.0 |
| Calcium carbonate | 29.0 |
| Talc | 43.0 |
| Zincphosphate | 66.0 |
| Zincoxide | 29.0 |
| Styrene acrylic latex | 380.0 |
| Epoxyester solution | 73.5 |
| Defoamer | 0.3 |
| Ammonia (25%) to pH~8.5 | 3.4 |
| Total | 1000.0 |

Solids content at spraying is 50 wt %. The particle size is approximately 100 nm (the exact value is 82 nm).

**<u>Reference Example 1</u>**

The various HMHECs are described and their performances in the anti-corrosion primer are summarized in Table 2a and b:

Table 2a

| Composition of some HMHECs to be evaluated in the anti-corrosion primer | | | | |
|---|---|---|---|---|
| | $M_v$ | Hydrophobe | HM-DS [wt %] | $C*_p$ [wt %] |
| HMHEC 1 | 290000 | C16 | 1.5 | 0.30 |
| HMHEC 2 | 100000 | C16 | 1.5 | 0.71 |
| HMHEC 3 | 60000 | C16 | 1.5 | 1.07 |
| HMHEC 4 | 48000 | C16 | 1.5 | 1.29 |
| HMHEC 5 | 40000 | C16 | 1.5 | 1.49 |
| HMHEC 6 | 48000 | C16 | 0.3 | 1.29 |
| HMHEC 7 | 48000 | C12 | 3.1 | 1.29 |
| HMHEC 8 | 48000 | NP | 2.3 | 1.29 |
| HMHEC 9 | 890000 | none | - | 0.12 |

NP: Nonylphenyl

Table 2b

| Performance of various HMHECs in an anti-corrosion primer based on a styrene acrylic latex and an epoxyester emulsion. | | | | | | |
|---|---|---|---|---|---|---|
| | Conc. [wt %] for 40s DIN 4 | Sprayability | Film appear. | 200 h salt spray resist. | Wet adhesion | Blistering |
| HMHEC 1 | 0.32 | poor | poor | 3 | 3 | none |
| HMHEC 2 | 0.42 | good | moderate | 5 | 3 | none |
| HMHEC 3 | 0.52 | good | smooth | 9 | 4 | none |
| HMHEC 4 | 0.62 | good | smooth | 9 | 4 | none |
| HMHEC 5 | 0.72 | good | smooth | 9 | 4 | none |
| HMHEC 6 | 1.04 | moderate | moderate | 3 | 3 | none |
| HMHEC 7 | 0.62 | good | smooth | 8 | 4 | none |
| HMHEC 8 | 0.63 | good | smooth | ND | 4 | none |
| HMHEC 9 | 0.21 | poor | poor | 3 | 4 | none |

It is obvious to conclude from the results in Table 2b that the HMHEC samples with a molecular weight within the $M_v$-range and present in the composition at thickener concentrations below $C*_p$, as outlined above, can be applied by industrial methods, while compositions not having a thickener $M_v$ and concentration according to the invention cannot. In particular, in formulations 3, 4, 5, 7 and 8 the concentration of the thickener was below $C*_p$ and the formulations could be applied by spraying giving excellent anti-corrosion primers, while in formulations 1, 2, 6 and 9 the concentration of the thickener was above $C*_p$ and, therefore, either the sprayability of the formulation was only moderate or the resulting film showed shortcomings (please note, that the conc. [wt %] for 40 s DIN 4 in table 2b has to be multiplied by 2 to allow a comparison with $C*_p$ in table 2a).

## Reference Example 2

In the same anti-corrosion primer of reference example 1 a hydrophobically modified methylhydroxethyl cellulose (HMMHEC 1) and a hydrophobically modified hydroxypropyl cellulose (HMHPC 1) were evaluated. The HMMHEC 1 sample has a molecular weight of 25000 and a dodecyl-substitution of 1.3 wt %. The HMHPC sample had a molecular weight of 66000 and a HP-MS of 2.5 and dodecyl-substitution of 1.9 wt %. The test results are summarized in Table 3. The products were compared with their non-modified precursors MHEC 1 and HPC 1 respectively.

Table 3

| Evaluation of hydrophobically modified MHEC and HPC in an anti-corrosion primer (formulation: Table 1). | | | | | | |
|---|---|---|---|---|---|---|
| | Conc. [wt %] for 40s DIN 4 | Sprayability | Film appear. | 200 h salt spray resist. | Wet adhesion | Blistering |
| MHEC 1 | 0.94 | poor | poor | ND | 3 | none |
| HMMHEC 1 | 0.26 | good | good | ND | 4 | none |
| HPC 1 | 1.68 | poor | poor | ND | 2-3 | slight |
| HMHPC 1 | 0.87 | good | good | ND | 4 | none |

The sprayability of the coatings with the hydrophobically modified materials is good while the film appearance of these samples is good as well. This can be expected on the basis of method described before. The molecular weight of HMMHEC 1 and HMHPC 1 is within the range indicated, while the critical polymer concentration is not exceeded of these materials:

C* HMMHEC: 0.57 wt %
C* HMHPC: 1.90 wt %

## Reference Example 3

Reference examples 1 and 2 were related to carbohydrate based associative thickeners and more specifically cellulose derivatives. Reference example 3 shows that the described selection method is also applicable to synthetic thickeners. Dodecyl- and cetyl-modified polyethyleneoxides with variable compositions were synthesized and evaluated in the anti-corrosion primer of Table 1.

The compositions of the hydrophobe end-capped polyethyleneglycols are given in Table 4, whereas the paint evaluation results are summarized in Table 5.

Table 4

| Composition of hydrophobe end-capped PEG samples. | | | | |
|---|---|---|---|---|
| | Hydrophobe | HM-DS [wt %] | $M_v$ | $C^*_i$ [wt %] |
| HMPEG 1 | C16 | 2.23 | 27000 | 3.4 |
| HMPEG 2 | C12 | 1.85 | 25000 | 3.5 |
| HMPEG 3 | C12 | 1.17 | 27000 | 3.4 |
| HMPEG 4 | C12 | 0.9 | 47000 | 2.6 |
| PEG 100000 | none | - | 100000 | 1.82 |

Table 5

| Performance of hydrophobe end-capped PEGs in an anti-corrosion primer (formulation: see Table 1). | | | | | | |
|---|---|---|---|---|---|---|
| | Conc. [wt %] for 40s DIN 4 | Sprayability | Film appear. | 200 h salt spray resist. | Wet adhesion | Blistering |
| HMPEG 1 | 0.24 | good | smooth | 9 | 4 | none |
| HMPEG 2 | 0.58 | good | smooth | 8 | 3 | none |

Table 5   (continued)

| | Conc. [wt %] for 40s DIN 4 | Sprayability | Film appear. | 200 h salt spray resist. | Wet adhesion | Blistering |
|---|---|---|---|---|---|---|
| Performance of hydrophobe end-capped PEGs in an anti-corrosion primer (formulation: see Table 1). | | | | | | |
| HMPEG 3 | 0.90 | good | smooth | 8 | 3 | none |
| HMPEG 4 | 0.46 | good | smooth | 8 | 3 | none |
| PEG 100000 | 3.8 | moderate | moderate | 1 | 1 | many |

The 3.8 wt % of PEG 100000 required to generate the 40 seconds DIN cup 4 exceeds the critical polymer concentration at the $M_v$ of 100000 (C* = 1.82 wt %). Therefore, sprayability and film appearance are poor. The tendency to flocculate the binder particles is illustrated by its poor water resistance and corrosion resistance.

Now it has been shown that the principle of the invention is both applicable to carbohydrate-based and synthetic associative thickeners. In order to demonstrate that the principle of the invention is also applicable to a wide variety of coating systems two associative thickeners are evaluated in other coating systems. The products selected are HMHEC 4 and HMPEG 1. As representative of a product outside the desired composition range HMHEC 2 was selected as reference together with a commercial product Natrosol Plus grade 331 with indicative composition of hydroxyethyl cellulose with $M_v \sim$ 300000 and cetyl substitution of approximately 0.6 wt %.

**Reference Example 4**

Reference example 4 shows the performance of the different rheology modifiers in a top coat based on a styrene acrylic latex. Table 6 exhibits the formulation of the top coat and table 7 summarizes the paint properties after spraying the coating on cold rolled bondar steel which was protected by an anti-corrosion primer based on the formulation of Table 1 using HMHEC 4 as a thickener.

Table 6

| | | | Parts by weight |
|---|---|---|---|
| Formulation of a high gloss top coat based on a small particle size styrene acrylic latex (82 nm). The styrene acrylic latex has the tradename Neocryl TK 62. | | | |
| 1) | | Water | 31.5 |
| 2) | | Styrene acrylic latex (Neocryl XK 62) | 244.3 |
| 3) | | Defoamer (Dehydran 1293/polydimethyl siloxane) | 3.0 |
| 4) | | Dispersant (Dispex GA 40 / ammonium salt of a polymeric carboxylic acid) | 5.5 |
| 5) | | Preservative | 1.0 |
| 6) | | Thickener | variable to 40 s DIN 4 |
| 7) | | Butylglycol (co-solvent/coalescent | 34.3 |
| 8) | | TiO$_2$ (Kronos 2190, pigment) | 181.1 |
| 9) | | Styrene acrylic latex (Neocryl XK 62) | 489.8 |
| 10) | | NaNO$_2$ (30%) (rust inhibitor) | 4.0 |
| Total | | | 1000.0 |

The solids content of the formulation is 50 wt %.

Components 1), 3), 4), 5), 7) and 8) were grind at 4000 rpm for 20 minutes and then added under stirring to 2) and 9). It is slowly stirred for 10 minutes and then 6) and 10) are added. It is stirred for additional 15 minutes.

Table 7

| | Conc. [wt %] for 40s | Sprayability | Film appear. | Dry adhesion | Film gloss 60 [%] | wet adhesion | $C^*_p$ |
|---|---|---|---|---|---|---|---|
| Performance of various thickeners in a top coat based on a styrene acrylic latex. | | | | | | | |
| Natrosol Plus 331 | 0.38 | poor | poor | 3 | 48 | 3 | 0.3 |
| HMHEC 2 | 0.59 | moderate | moderate | 4 | 54 | 3 | 0.71 |
| HMHEC 4 | 0.54 | good | smooth | 4 | 63 | 4 | 1.29 |
| HMPEG 1 | 0.30 | good | smooth | 4 | 62 | 4 | 3.4 |

**Reference example 5**

In this reference example it is shown that the selected materials HMHEC 4 and HMPEG 1 demonstrate good performance in coatings for wood. In Table 8 and Table 9 formulations are given of a parquet lacquer based on a urethane-acrylic dispersion (Table 8) and of a universal wood coating based on a combination of acrylic latexes (Table 9). The paint properties obtained with the different thickeners are then summarized in Table 10 and 11.

Table 8

| Formulation of a parquet lacquer. | | **Parts by weight** |
|---|---|---|
| 1) | Urethane-acrylic dispersion (Neopac E106) | 88.0 |
| 2) | Ethyldiglycol | 4.0 |
| 3) | Defoamer (Byk 344), surface active agent | 0.4 |
| 4) | Thickener | variable to 40 DIN 4 |
| 5) | Wax emulsion (Aquacer 513) | 5.0 |
| 6) | Defoamer (Dehydran 129) | 0.8 |
| 7) | Wetting agent (Dapro W-77) | 0.5 |
| | | 100.0 |

The solids content of this formulation is 34 wt %.
The particle size is approximately 100 nm.
Components 1) to 6) were dispersed under high speed. Then the speed is reduced and 7) is added. The parquet lacquer is allowed to stand for 24 hours prior to use.

Table 9

| Formulation of a universal wood coating. | **Parts by weight** |
|---|---|
| Acrylic latex 1 | 72.0 |
| Acrylic latex 2 | 8.0 |
| Wax emulsion | 5.0 |
| Diethyleneglycolmonoethylether | 10.0 |
| Defoamer | 1.0 |
| Matting agent | 1.0 |
| Thickener + water | variable to 40 s DIN 4 |
| Defoamer | 2.0 |
| Ammonia (25%) | to pH ~ 8.2 |
| | 100.0 |

The solids content of this formulation is 38 wt %.
The particle size is approximately 100 nm.

The acrylic latex 1 and the acrylic latex 2 are as discussed in the description.

Table 10

| Paint properties of the parquet lacquer (Table 8) using different rheology modifiers. | | | | | | | |
|---|---|---|---|---|---|---|---|
| | Conc. [wt %] for 40s | Flow | Film appear. | Gloss 20 (%) | Stain resist. | Hot pan test | $C^*_p$ |
| Plus 331 | 0.74 | poor | moderate | 55 | moderate | poor | 0.30 |
| HMHEC 2 | 0.74 | moderate | good | 60 | good | moderate | 0.71 |
| HMHEC 4 | 0.76 | good | good | 64 | good | good | 1.29 |
| HMPEG 1 | 0.30 | good | good | 62 | good | moderate | 3.4 |

HMHEC 4 and HMPEG 1 provide the coating again with good film properties (high gloss and smooth films) and the flow of these products is good. The moderate rating with HMPEG 1 in the hot pan test is not due to flocculation as can be seen from its good gloss value. It is more a result of its low softening temperature (~ 45 C).

Table 11

| Paint properties of the universal wood coating using the different thickeners. | | | | | | | |
|---|---|---|---|---|---|---|---|
| | Conc. [wt %] for 40s | Sprayability | Film appear. | Gloss 60 (%) | Stain resist. | Hot pan test | $C^*_p$ |
| Plus 331 | 0.18 | poor | moderate | 21 | moderate | poor | 0.30 |
| HMHEC 2 | 0.21 | moderate | moderate | 25 | good | moderate | 0.71 |
| HMHEC 4 | 0.26 | good | good | 25 | good | good | 1.29 |
| HMPEG 1 | 0.61 | good | good | 25 | good | moderate | 3.4 |

## Reference example 6

In reference example 6 a number of coating formulations are given using HMHEC 4 or HMPEG 1 as a rheology modifier.

Table 12

| Formulation of airless sprayable pigmented top coat. | |
|---|---|
| | **Parts by weight** |
| Propyleneglycol | 22.0 |
| Water | 25.0 |
| 2-amino-2-methyl-1-propanol | 3.0 |
| Defoamer | 5.0 |
| Wetting agent | 4.0 |
| Dispersant | 3.0 |
| $TiO_2$ | 152.0 |
| $CaCO_3$ | 51.0 |
| Acrylic core shell latex | 666.0 |
| Coalescing agent | 6.0 |
| Defoamer | 22.0 |
| Water + thickener (HMHEC 4: 2.5 parts or HMPEG 1: 1.0 parts) | 14.0 |
| Total | 1000.0 |

Table 13

| Formulation of a metal primer based on an epoxyester emulsion. | |
|---|---|
| | Parts by weight |
| Water | 409.5 |
| Dispersant | 87.0 |
| Defoamer | 1.5 |
| $TiO_2$ | 345.0 |
| $CaCO_3$ | 174.0 |
| Talc | 130.5 |
| Anti-corrosion pigment | 217.5 |
| Epoxyester emulsion | 1440.0 |
| Siccatol 938 | 36.0 |
| Wetting agent | 7.5 |
| Thickener + water (HMHEC 4 : 9.6 parts or HMPEG 1 : 5.8 parts per 1000 parts of paint) | 151.5 |
| | 3000.0 |

In the following examples combinations of associative thickeners are employed. One associative thickener of these combinations of associative thickeners is the associative thickener HMHEC 4 defined in Table 2a above. The other associative thickeners which are employed in the combinations of associative thickeners are defined in Table 14 below:

Table 14

| associative thickener | $M_w$ ($\approx M_v$) | $[\eta](l/g)$ | $C_i^*$ (wt-%) |
|---|---|---|---|
| Coatex BR 100 | 5000 | 0.013 | 7.67 |
| RM 1020/2020/RM 8 | 30000 | 0.0308 | 3.25 |
| RM 12 | $\leq 50000$ | 0.0394 | 2.54 |
| $C_{12}$ PAPE | 26000 | 0.0288 | 3.47 |
| $C_{16}$ PAPE | 25000 | 0.0282 | 3.54 |

The associative thickener $C_{12}$ PAPE has approximately the following structure:

$$C_{12}\text{-O-}(CH_2\text{-}CH_2\text{-O})_{730}\text{-}C_{12}.$$

$C_{16}$ PAPE has approximately the same structure as above, but the end-capping is not by $C_{12}$ but by $C_{16}$.

The molecular weight of the PAPEs is a distribution. Part of the material is di-end-capped, part is mono-end-capped.

The PAPE-products (hydrophobically modified poly(acetal-polyethers) and methods for their production are disclosed e.g. in US-A-5 574 127.

RM 2020, RM 1020, RM 8 and RM 12 are products from the acrysol series of Rohm and Haas and are commercially available. The basic polymer for these products is a linear polyethylene glycol and the hydrophobes are linked via the urethane group. The hydrophobe linked to the end of RM8 is longer/stronger than the hydrophobe linked at the end of the other RM products. Other examples of polyurethanes are also commercially available and can be used according to the invention such as the products marketed under the tradenames Tafigel PUR 40, Rheolate 278, Rheolate 255 and Borchigel L75.

The commercial product Coatex BR 100 (polyurethane) is an aqueous solution containing approximately 50% of the active associative thickener. The molecular weight of the associative thickener is approximately $M_w = 5000$. An alkyl hydrophobe is linked to the polyethylene glycol via an aromatic isocyanate group.

The $C_{16}$-PAPE is employed as a 25 wt-% solution in water/butyl carbitol (80/20). The $C_{16}$ content is 1.4%. The $C_{12}$-PAPE is employed as a 20 wt-% solution in water. The $C_{12}$ content is 1.3%.

In the Tables below the amount of thickener is always calculated on the thickener as such and not on the specific dispersion in which the thickener is employed. Thus the values are corrected to a thickener content of 100%.

The above values for the critical concentration of each associative thickener were calculated based on system 1 as defined in the description above. The compositions employed in the examples also roughly correspond to this system 1 if not stated otherwise.

In the following examples ICI viscosity is the viscosity determined with ICI Cone&Plate viscometer, which measures the viscosity at a fixed shear rate of 10000 s-1. The viscosity can be read directly from the scale in Poise. This viscosity indicates its behaviour under application by brush (or in other words the brush drag), roller and spraying, so under high shear.

The Stormer viscosity is measured with a digital Stormer viscometer from which the reading indicates directly the viscosity in Krebs Units (KU's). This viscosity is indicating the can viscosity.

For the combinations of associative thickeners used in the following examples the critical concentrations have been calculated and the critical concentrations are summarized in Table 15 below.

## Table 15

| Combination of associative thickeners | $C^*_p = \sum_i W_i \times C_i{}^*_p$ |
|---|---|
| $C_{16}$-PAPE (50%) / HMHEC 4 (50%) | 2.42 |
| $C_{12}$-PAPE (50%) / HMHEC 4 (50%) | 2.38 |
| Acrysol RM 1020/RM 2020/RM 8 (50%) / HMHEC 4 (50%) | 2.27 |
| Acrysol RM 12 W (50%) / HMHEC 4 (50%) | 1.92 |
| Coatex BR 100 (50%) / HMHEC 4 (50%) | 4.48 |

### Example 1

A high gloss top coat was formulated as shown in Table 6 of reference example 4. The combinations of associative thickeners as shown in Table 16 were used instead of the individual associative thickeners used in reference example 4. The high gloss top coat was sprayed on a metal surface using a usual spray gun.

For technical reasons the high gloss top-coat should be applied at a DIN 4 cup viscosity of 60 seconds. Table 16 below shows the amount of combination of thickeners required to achieve this DIN 4 cup viscosity and some further important features of the applied high gloss top-coat. It can be seen that the concentration of the combination of the associative thickener necessary to achieve the DIN 4 cup viscosity of 60 seconds is well below the critical concentration of the corresponding combination of associative thickeners.

For comparative reasons a high gloss top-coat based on the composition of Table 6 has been prepared with the single associative thickeners shown in Table 17 below. The amount of associative thickener to achieve the required DIN cup 4 viscosity of 60 seconds and further important physical characteristics of the high gloss top-coat are shown in Table 17 below. While the necessary concentration of associative thickener shown in Table 17 below is still below the critical value for the corresponding associative thickeners, it can be seen that significantly more associative thickener is necessary to achieve the required DIN cup 4 viscosity if only a single associative thickener is used. Thus by using a combination of associative thickeners according to the present invention the necessary concentration of associative thickeners in the aqueous coating composition can be significantly reduced.

Table 16

| Thickener type<br><br>Paint Properties | C16 PAPE/ HMHEC 4 blend 50/50 | C12 PAPE/ HMHEC 4 blend 50/50 | Acrysol RM 2020/HMH EC 4 blend 50/50 | Acrysol RM 8/HMHEC 4 blend 50/50 | HMHEC 4 unblended |
|---|---|---|---|---|---|
| Amount of associative thickener (combination) to achieve a DIN4 cup viscosity of 60 s (wt.-%) | 0.07 | 0.20 | 0.20 | 0.06 | 0.33 |
| Stormer viscosity, KU initial after 24 hrs. | 64<br>64 | 65<br>65 | 65<br>66 | 65<br>66 | 67<br>67 |
| ICI viscosity, mPa.s | 55 | 80 | 85 | 55 | 50 |
| Layer thickness, um | 100 | 120 | 120 | 100 | 160 |
| Adhesion A 1)<br>B 1) | 3B<br>3B | 3B<br>3B | 3B<br>3B | 3B<br>3B | 3B<br>3B |

1) A = Adhesion after 7 days drying       Rating 1 -5; 5 = best
B = Adhesion after 7 days drying + 24 hrs. $H_2O$       Rating 1 -5; 5 = best

Table 17

| Thickener type<br><br>Paint Properties | C16 PAPE | C12 PAPE | Acrysol RM 2020 | Acrysol RM 8 | HMHEC 4 |
|---|---|---|---|---|---|
| Amount of associative thickener to achieve a DIN4 cup viscosity | 0.14 | 0.41 | 0.39 | 0.12 | 0.33 |
| viscosity, KU initial after 24 hrs. | 65<br>65 | 65<br>65 | 65<br>66 | 65<br>65 | 67<br>67 |
| ICI viscosity, mPa.s | 55 | 105 | 105 | 55 | 50 |
| Layer thickness, um | 80 | 80-100 | 80-100 | 80 | 160 |
| Adhesion A 1)<br>B 1) | 3B<br>3B | 3B<br>3B | 3B<br>2B-3B | 3B<br>3B-4B | 3B<br>3B |

1) A = Adhesion after 7 days drying       Rating 1 -5; 5 = best
B = Adhesion after 7 days drying + 24 hrs. $H_2O$       Rating 1 -5; 5 = best

Regarding the layer thickness indicated in Tables 16 and 17 and in further Tables below, it should be noted that the layer thickness is measured by spraying the paint including the thickener onto a vertical substrate as thick as possible, at the limit of sagging. The so obtained layer thickener is measured.

The layer thickness depends on how the structure recovery of the paint develops in time and to what level. It is a rheology phenomenon and is dependent on two components: the viscosity and the time. It is influenced by the structure of the polymer coil in solution.

### Example 2

A coating for wood (a clear wood laquer) has been prepared as shown in table 8 in reference example 5. The details and results of this example are shown in tables 18 and 19 below. Regarding the critical concentrations of the associative thickeners and of the combinations of associative thickeners it can be referred to tables 14 and 15 above. The laquer was applied to wood using a usual spray gun.

Again from tables 18 and 19 it can be seen that using a combination of associative thickeners according to the present invention the concentration of the associative thickener to achieve a DIN cup 4 viscosity (in this example a DIN cup 4 viscosity of 40 sec.) can be significantly reduced compared to corresponding composition containing only one associative thickener.

Table 18

| Thickener type | C16 PAPE/ HMHEC 4 blend 50/50 | C12 PAPE/ HMHEC 4 blend 50/50 | Acrysol RM 2020/ HMHEC 4 blend 50/50 | Acrysol RM 8/ HMHEC 4 blend 50/50 | Coatex BR 100 / HMHEC 4 blend 50/50 | HMHEC 4 |
|---|---|---|---|---|---|---|
| **Paint properties** | | | | | | |
| Amount of associative thickener (combination) to achieve a DIN 4 cup viscosity of 40 s (wt.-%) | 0.08 | 0.18 | 0.11 | 0.07 | 0.10 | 0.36 |
| Stormer viscosity, KU initial | 57 | | 56 | 57 | 56 | 55 |
| ICI viscosity, mPa.s | 45 | | 42 | 35 | 35 | 35 |
| König hardness,s 1) | 142 | | 142 | 147 | 121 | 147 |
| Gloss 20%2) 60% 2) | 82 94 | | 76 90 | 83 93 | 72 86 | 83 94 |
| Stain resistance; HOT PAN-test 3) | 4 | | 4 | 4 | 4 | 3 |

1) König hardness: 100 micron on glass after drying 10 min. at 60°C and 16 hrs. at 50°C

2) Gloss: 200 micron on black paper after drying 10 min. at 60°C and 16 hrs. at 50°C

3) Hot pan: 200 micron on wood after drying 10 min. at 60°C and 16 hrs. at 50°C Rating 1-10; 1 = best

Table 19

| Thickener type | C16 PAPE | C12 PAPE | Acrysol RM 2020 | Acrysol RM 8 | Coatex BR 100 | HMHEC 4 |
| --- | --- | --- | --- | --- | --- | --- |
| **Paint properties** | | | | | | |
| Amount of associative thickener to achieve a DIN 4 cup viscosity of 40 s (wt.-%) | 0.16 | 0.37 | 0.22 | 0.10 | 0.20 | 0.36 |
| Stormer viscosity, KU initial | 57 | 57 | 57 | 57 | 57 | 55 |
| ICI viscosity, mPa.s | 40 | 55 | 50 | 35 | 35 | 35 |
| König hardness, s1) | 150 | 135 | 134 | 147 | 115 | 147 |
| Gloss 20% 2) 60%2) | 81 94 | 83 95 | 75 91 | 83 94 | 70 85 | 83 94 |
| Stain resistance; HOT PAN-test3) | 4 | 5 | 5 | 4 | 5 | 3 |

1) König hardness: 100 micron on glass after drying 10 min. at 60°C and 16 hrs. at 50°C

2) Gloss: 200 micron on black paper after drying 10 min. at 60°C and 16 hrs. at 50°C

3) Hot pan: 200 micron on wood after drying 10 min. at 60°C and 16 hrs. at 50°C    Rating 1-10; 1 = best

## Example 3

A clear wood laquer was prepared having a formulation as shown in table 9 of reference example 5. The details of the associative thickeners/combination of associative thickeners and the amount of the associative thickeners/ combinations of associative thickeners as well as some important physical characteristics of the corresponding clear wood laquer are shown in tables 20 and 21 below. Regarding the critical concentrations of the employed associative thickeners and combinations of associative thickeners, it can be referred to tables 14 and 15 above.

Again it becomes evident that the total amount of associative thickener in the aqueous coating composition can be significantly reduced if not a single associative thickener is employed but a combination of associative thickeners according to the invention. As in example 2 the viscosity required for the specicif application was a DIN 4 cup viscosity of 40 seconds and the amount of thickener/combination of thickeners was adjusted to meet this requirement.

Table 20

| Thickener type | C16 PAPE/ HMHEC 4 blend 50/50 | C12 PAPE/ HMHEC 4 blend 50/50 | Acrysol RM 2020/ HMHEC 4 blend 50/50 | Acrysol RM 8/ HMHEC 4 blend 50/50 | Coatex BR 100 / HMHEC 4 blend 50/50 | HMHEC 4 |
|---|---|---|---|---|---|---|
| **Paint properties** | | | | | | |
| Amount of associative thickener (combination) to achieve a DIN 4 cup viscosity of 40 s (wt.-%) | 0.08 | 0.10 | 0.09 | 0.06 | 0.09 | 0.18 |
| Stormer viscosity, KU initial | 59 | 56 | 59 | 58 | 55 | 57 |
| König hardness,s 1) | 95 | 96 | 93 | 95 | 93 | 101 |
| Gloss 20%2) 60% 2) | 3 19 | 3 18 | 3 19 | 4 19 | 3 19 | 3 24 |
| Stain resistance; HOT PAN- test3) | 2 | 2 | 2 | 2 | 2 | 2 |

1) König hardness: 100 micron on glass after drying 10 min. at 60°C and 16 hrs. at 50°C

2) Gloss: 200 micron on black paper after drying 10 min. at 60°C and 16 hrs. at 50°C

3) Hot pan: 200 micron on wood after drying 10 min. at 60°C and 16 hrs. at 50°C Rating 1-10; 1 = best

Table 21

| Thickener type | C16 PAPE | C12 PAPE | Acrysol RM 2020 | Acrysol RM 8 | Coatex BR 100 | HMHEC 4 |
|---|---|---|---|---|---|---|
| **Paint properties** | | | | | | |
| Amount of associative thickener to achieve a DIN 4 cup viscosity of 40 s (wt.-%) | 0.15 | 0.21 | 0.17 | 0.12 | 0.18 | 0.18 |
| Stormer viscosity, KU initial | 57 | 57 | 58 | 57 | 57 | 57 |
| ICI viscosity, mPa.s | 35 | 50 | 45 | 35 | 40 | 40 |
| König hardness,s 1) | 102 | 102 | 101 | 106 | 102 | 101 |

1) König hardness: 100 micron on glass after drying 10 min. at 60°C and 16 hrs. at 50°C

Table 21   (continued)

| Thickener type | C16 PAPE | C12 PAPE | Acrysol RM 2020 | Acrysol RM 8 | Coatex BR 100 | HMHEC 4 |
|---|---|---|---|---|---|---|
| **Paint properties** | | | | | | |
| Gloss 20%2) 60% 2) | 3 22 | 3 24 | 4 28 | 5 31 | 3 26 | 3 24 |
| Stain resistance; HOT PAN-test3) | 2 | 2 | 2 | 2 | 2 | 2 |

2) Gloss: 200 micron on black paper after drying 10 min. at 60°C and 16 hrs. at 50°C

3) Hot pan: 200 micron on wood after drying 10 min. at 60°C and 16 hrs. at 50°C Rating 1-10; 1 = best

## Example 4

A two component waterborn polyurethane-acrylic primer having the compositions as shown in following Table 22 was prepared.

Table 22

| Component | Function | Chemical description | Parts by weight |
|---|---|---|---|
| **Component 1** | | | |
| Bayhydrol VP LS 2235 | binder | acrylic polyol latex (45%) | 322.75 |
| Surfynol 104E | defoamer/stabilizer | 50% nonionic sur-factant in ethylene glycol | 3.30 |
| Foamaster TCX | defoamer | Trademark | 4.40 |
| Bayferrox 130 M/Red oxide 130 M | red pigment | $Fe_2O_3$ | 44.80 |
| Micro Talc AT-1 | extender | talc | 163.60 |
| Heucophos SAPP | AC pigment | Sr/Al-polyphosphate | 144.10 |
| Quarzmehl Sikron F 500 | extender | $SiO_2$ | 135.40 |
| Water (demineralized) | | | 71.00 |
| **Component 2** | | | |
| Corrosion inhibitor L1 | | | 5.50 |
| Thickener | | | as required to achieve a DIN 4 cup viscosity of 40 s |
| **Component 3** | | | |
| Desmodur VP LS 2025/1, 80% in 1-methoxy propylacetate-2 | hardener in coalescent | | 99.30 |

The binder was dispersed for approximately 20 minutes at approximately 3000 rpm with a dissolver under cooling. The defoamer/stabilizer was stirred into the binder for approximately 3 minutes at 2000 rpm. The defoamer was added at about 2000 rpm and the viscosity was adjusted with water to 62 KU (= approximately 28 seconds DIN 4 cup).

The composition as shown in Table 22 above was prepared with several associated thickeners wherein the amount of associative thickener/combination of associative thickeners was adjusted so that the polyurethane primer meets a DIN cup 4 viscosity of 40 seconds. The thickeners and combinations of thickeners used and the amount of thickeners and combination of thickeners needed are shown in Tables 23 and 24 below. As in examples 1-3 it becomes evident that the total amount of associative thickeners can be significantly reduced if not one associative thickener is employed, but if a combination of associative thickeners is employed according to the present invention.

Table 23

| Thickener type / Paint properties | C16 PAPE/ HMHEC 4 blend 50/50 | C12 PAPE/ HMHEC 4 blend 50/50 | Acrysol RM 2020/ HMHEC 4 blend 50/50 | Acrysol RM 8/ HMHEC 4 blend 50/50 | Coatex BR 100 / HMHEC 4 blend 50/50 | HMHEC 4 |
|---|---|---|---|---|---|---|
| Amount of associative thickener (combination) to achieve a DIN 4 cup viscosity of 40 s (wt.-%) | 0.02 | 0.06 | 0.04 | 0.02 | 0.04 | 0.13 |
| Stormer viscosity, KU initial after 24 hrs. | 65 65 | 63 64 | 63 63 | 66 67 | 64 63 | 63 62 |
| ICI viscosity, mPa.s | 40 | 55 | 50 | 40 | 40 | 40 |
| Layer thickness, um | 100 | 100 | 100 | 100 | 100 | 100-120 |
| Adhesion A 1) B 1) | 5B 0B | 5B 0B | 5B 0B | 5B 0B | 5B 0B | 5B 0B |

1) A = Adhesion after 7 days drying       Rating 1-5; 5 = best
B = Adhesion after 7 days drying + 24 hrs. $H_2O$       Rating 1-5; 5 = best

Table 24

| Thickener type / Paint properties | C16 PAPE | C12 PAPE | Acrysol RM 2020 | Acrysol RM 8 | Coatex BR 100 | HMHEC 4 |
|---|---|---|---|---|---|---|
| Amount of associative thickener to achieve a DIN 4 cup viscosity of 40 s (wt.-%) | 0.04 | 0.13 | 0.08 | 0.03 | 0.07 | 0.13 |
| Stormer viscosity, KU initial after 24 hrs. | 63 64 | 63 64 | 63 62 | 63 62 | 63 63 | 63 62 |
| ICI viscosity, mPa.s | 40 | 60 | 55 | 35 | 40 | 40 |
| Layer thickness, um | 60-80 | 60-80 | 60-80 | 60-80 | 60-80 | 100-120 |

Table 24   (continued)

| Thickener type | C16 PAPE | C12 PAPE | Acrysol RM 2020 | Acrysol RM 8 | Coatex BR 100 | HMHEC 4 |
|---|---|---|---|---|---|---|
| **Paint properties** | | | | | | |
| Adhesion A 1) B 1) | 5B 0B | 4B-5B 0B | 5B 0B | 4B-5B 0B | 4B-5B 0B | 5B 0B |

1) A = Adhesion after 7 days drying      Rating 1-5; 5 = best
B = Adhesion after 7 days drying + 24 hrs. $H_2O$      Rating 1-5; 5 = best

## Example 5

A waterborne anticorrosive primer based on a styrene acrylic latex (Neocryl XK 65) having a composition as shown in the following table 25 was prepared:

Table 25

| | Component | Function | Chemical description | Parts by weight |
|---|---|---|---|---|
| 1) | Water | | | 58.50 |
| 2) | AMP-90 | pH stabilizer/dispersant | aminopropanol | 0.60 |
| 3) | Disperse Ayd W-22 | dispersant | blends of anionic and nonionic surface active materials | 5.10 |
| 4) | Orotan 850 | dispersant | sodium salt of polymeric carboxylic acid | 5.10 |
| 5) | Ser AD FA-179 | corrosion inhibitor | zinccomponent | 4.70 |
| 6) | Butylglycol | co-solvent/coalescent | glycol | 18.50 |
| 7) | Drew Plus TS-4380 | defoamer | 10% solution of modified polydimethyl siloxane | 0.40 |
| 8) | Kronos 2195 | pigment | $TiO_2$ | 92.70 |
| 9) | Blanc Fixe N | extender | $BaSO_4$, 2 micron | 26.80 |
| 10) | Talc IT Extra | extender | talc, < 20 micron | 39.80 |
| 11) | Heucophos ZPO | AC pigment | mod. Zinc phosphate | 61.10 |
| 12) | Harzsiegel Standard (ZNO) | AC pigment | Zinc oxide | 26.80 |
| 13) | Demi water | | | 30.90 |
| 14) | Neocryl XK 65 | binder | styrene acrylic latex (40%) | 500.98 |
| 15) | Resydrol WE237-L (70%) | resin | epoxy resin | 68.10 |
| 16) | Drew Plus TW4380 | defoamer | | 0.30 |
| 17) | Texanol | coalescing agent | ester alcohol | 9.60 |
| 18) | Ammonia (25%) | | | up to pH 8.5 |
| 19) | Demi water | | | 19.82 |
| 20) | Thickener | | | as required to achieve a DIN 4 cup viscosity of 60 s |

It should be noted that the resydrol solution used in the above composition consisted of 43.8% of 70% Residrol WE237-L solution, of 20.8% butyl "ethoxol", of 0.5% cobalt drier (8% Co) and of 3% of 25% ammonia solution to adjust a pH value of 9.0. All percentages above are based on weight.

A 1 liter double-walled stainless steel container equipped with a dispersion blade (70 mm in diameter) is charged with components 1) to 7) under slow stirring of about 500 rpm. The mixture is stirred for 5 minutes. Then components 8) to 12) are added to the mixture. The mixing speed is increased to about 6000 rpm and the resultant mixture is stirred for 25 minutes. During this stirring water was circulated around the jacket to dissipate heat generated during the mixing of the slurry. After this dispersing process, the grind was added to component 14) under slow stirring. It is stirred for further 15 minutes. Then componente 13) and 15) to 19) are added to the mixture and the resulting mixture is stirred for 30 minutes at about 3000 rmp. The so obtained (not yet thickened) primer was sieved through 270 Mesh (53 Microns). For spray application the viscosity of the primer is adjusted by adding a sufficient amount thickener to meet the requirement of 60 seconds DIN 4 cup.

The associative thickeners and the combination of the associative thickeners used and some relevant physical characteristics of the obtained anti-corrosion paints are shown in tables 26 and 27 below. Regarding the critical concentrations of the employed associative thickeners and combination of the associative thickeners it can be referred to tables 14 and 15 above.

Again it becomes evident that the total amount of associative thickener in the aqueous coating compositions can be significantly reduced if not a single associative thickener is employed but rather a combination of associative thickeners according to the invention. The viscosity required for the specific application was a DIN 4 cup viscosity of 60 seconds and the amount of thickener and of combination of thickeners was adjusted to meet this requirement.

Table 26

| Thickener type | C16 PAPE/ HMHEC 4 blend50/50 | C12 PAPE/ HMHEC 4 blend 50/50 | Acrysol RM 1020/ HMHEC 4 blend 50/50 | Acrysol RM 2020/ HMHEC 4 blend 50/50 | Acrysol RM 8 / HMHEC 4 blend 50/50 | Acrysol RM 12W / HMHEC 4 blend 50/50 | HMHEC 4 |
|---|---|---|---|---|---|---|---|
| **Paint Properties** | | | | | | | |
| Amount of associative thickener (combination) to achieve a DIN 4 cup viscosity of 60 s (wt.-%) | 0.02 | 0.06 | 0.06 | 0.06 | 0.02 | 0.02 | 0.14 |
| Stormer viscosity, KU initial after 24 hrs. | 68 68 | 69 69 | 71 71 | 68 69 | 71 72 | 66 67 | 67 68 |
| DIN 4 cup viscosity, s | 61 | 63 | 67 | 60 | 65 | 60 | 45 |
| ICI viscosity, mPa.s | 50 | 65 | 65 | 60 | 50 | 40 | 45 |
| Layer thickness, um | 110 | 110 | 110 | 100 | 100 | 90 | 140-160 |
| Adhesion A 1) B 1) | 3B 3B | 3B 3B | 3B 3B-4B | 3B 3B | 3B 3B | 3B 3B | 3B 3B |

1) A = Adhesion after 7 days drying      Rating 1-5; 5 = best
   B = Adhesion after 7 days drying + 24 hrs. $H_2O$      Rating 1-5; 5 = best

Table 27

| Thickener type | C16 PAPE | C12 PAPE | Acrysol RM 1020 | Acrysol RM 2020 | Acrysol RM 8 | Acrysol RM 12 W | HMHEC 4 |
|---|---|---|---|---|---|---|---|
| **Paint Properties** | | | | | | | |
| Amount of associative thickener to achieve a DIN 4 cup viscosity of 60 s (wt.-%) | 0.04 | 0.13 | 0.11 | 0.12 | 0.03 | 0.04 | 0.14 |
| Stormer viscosity, KU initial after 24 hrs. | 69 70 | 69 70 | 69 70 | 67 68 | 69 70 | 69 70 | 67 68 |
| ICI viscosity, mPa.s | 50 | 75 | 70 | 65 | 50 | 40 | 45 |
| Layer thickness, um | 80 | 80 | 80 | 80 | 80 | 80 | 140-160 |
| Adhesion A 1) B 1) | 3B 3B | 3B 3B | 3B 3B-4B | 3B 2B-3B | 3B 3B-4B | 3B 3B-4B | 3B 3B |

1) A = Adhesion after 7 days drying     Rating 1-5; 5 = best
B = Adhesion after 7 days drying + 24 hrs. $H_2O$     Rating 1-5; 5 = best

## Example 6

A water-borne epoxy primer having the composition as shown in the following table 28 was prepared. The particle size of this system is about 700 nm. The critical concentration is higher than the critical concentration calculated on the basis of the systems having a particle size of 100 nm.

Table 28

| Component | | | Function | Chemical description | Parts by weight |
|---|---|---|---|---|---|
| **Component 1** | | | | | |
| | 1) | Beckopox EH 623 | binder | aliphatic polyamine adduct (80% in water) | 82.1 |
| | 2) | Water | | | 166.3 |
| | 3) | Additol XL 270 | dispersant | | 9.7 |
| | 4) | Byk 024 | defoamer | mixture of foam destr. polymers and siloxanes | 1.5 |
| | 5) | Byk 333 | substrate additive | polyether mod. dimethylpolysiloxane copol. | 0.3 |
| | 6) | Micro Talc AT-1 | extender | talc | 78.6 |
| | 7) | Heucophos SAPP | AC pigment | Sr/Al-polyphosphate | 78.6 |
| | 8) | Bayferrox 130 M | red pigment | $Fe_2O_3$ | 68.4 |

Table 28   (continued)

| Component | | Function | Chemical description | Parts by weight |
|---|---|---|---|---|
| **Component 1** | | | | |
| 9) | Millicarb | filler | $CaCO_3$ | 76.9 |
| 10) | Byk 024 | defoamer | mixture of foam destr. polymers and siloxanes | 0.2 |
| **Component 2** | | | | |
| 11) | Beckopox EP 384W/ 53WAMP | resin | epoxy resin dispersion | 358.9 |
| 12) | Beckopox EP 75 | thinner | aliphatic glycidyl ether | 21.1 |
| **Component 3** | | | | |
| 13) | thickener | | | as required to achieve a DIN 4 cup viscosity of 40 s |
| 14) | Water | | | 30.4 |

Compounds 1) to 9) are dispersed for 10 min. at 6500 rpm, compound 10) is added and it is dispersed for further 10 min. at 3000 rpm. Component 2) is stirred in component 1) for approximately 3 min. at 2000 rpm. Component 3) is added at 2000 rpm and th viscosity is adjusted with water to 62 KU (approximately 35 s DIN 4 cup).

The details of the associative thickeners/combination of associative thickeners and of the amount of associative thickeners/combinations of associative thickeners as well as some important physical characteristics of the corresponding epoxy primers are shown in tables 29 and 30 below. Regarding the critical concentrations of the employed associative thickeners and combinations of associative thickeners it can be referred to tables 14 and 15 above.

Again it becomes evident that the total amount of associative thickener in the aqueous coating composition can be significantly reduced if not a single associative thickener is employed but a combination of associative thickeners according to the invention. The viscosity required for the specific application was a DIN 4 cup viscosity of 40 seconds and the amount of thickener/combination of thickeners was adjusted to meet this requirement.

Table 29

| Thickener type / Paint properties | C16 PAPE/ HMHEC 4 blend 50/50 | C12 PAPE/ HMHEC 4 blend 50/50 | Acrysol RM 2020 HMHEC 4 blend 50/50 | Acrysol RM 8 HMHEC 4 blend 50/50 | Coatex BR 100 / HMHEC 4 blend 50/50 | HMHEC 4 |
|---|---|---|---|---|---|---|
| Amount of associative thickener (combination) to achieve a DIN 4 cup viscosity of 40 s (wt.-%) | 0.10 | 0.10 | 0.10 | 0.10 | 0.10 | 0.21 |
| Stormer viscosity, KU initial | 62 | 62 | 62 | 63 | 62 | 62 |
| ICI viscosity, mPa.s | 115 | 115 | 120 | 110 | 110 | 110 |
| Layer thickness, um | 100 | 100 | 100 | 100 | 100 | 100-120 |

Table 29   (continued)

| Thickener type | C16 PAPE/ HMHEC 4 blend 50/50 | C12 PAPE/ HMHEC 4 blend 50/50 | Acrysol RM 2020 HMHEC 4 blend 50/50 | Acrysol RM 8 HMHEC 4 blend 50/50 | Coatex BR 100 / HMHEC 4 blend 50/50 | HMHEC 4 |
|---|---|---|---|---|---|---|
| Paint properties | | | | | | |
| Adhesion A 1) B 1) | 4B-5B 4B | 4B-5B 4B | 4B-5B 4B | 4B 4B | 4B-5B 4B | 4B-5B 4B |

1) A = Adhesion after 7 days drying        Rating 1-5; 5 = best
B = Adhesion after 7 days drying + 24 hrs. $H_2O$        Rating 1-5; 5 = best

Table 30

| Thickener type | C16 PAPE | C12 PAPE | Acrysol RM 2020 | Acrysol RM 8 | Coatex BR 100 | HMHEC 4 |
|---|---|---|---|---|---|---|
| Paint properties | | | | | | |
| Amount of associative thickener to achieve a DIN 4 cup viscosity of 40 s (wt.-%) | 0.28 | 0.34 | 0.42 | 0.30 | 0.32 | 0.21 |
| Stormer viscosity, KU initial | 62 | 62 | 62 | 63 | 62 | 62 |
| ICI viscosity, mPa.s | 115 | 120 | 135 | 110 | 110 | 110 |
| Layer thickness, um | 80-100 | 80-100 | 80-100 | 80-100 | 80-100 | 100-120 |
| Adhesion A 1) B 1) | 4B-5B 4B | 4B-5B 4B | 4B-5B 4B | 4B 4B | 4B-5B 4B | 4B-5B 4B |

1) A = Adhesion after 7 days drying        Rating 1-5; 5 = best
B = Adhesion after 7 days drying + 24 hrs. $H_2O$        Rating 1-5; 5 = best

**Claims**

1. Use of an aqueous protective coating composition containing a binder system and a combination of associative thickeners, for industrial coatings, **characterized in that** at least one of the associative thickeners which is present in the combination of associative thickeners is not a polyurethane thickener and that the combination of associative thickeners is selected so that the concentration of associative thickeners C required by the specific application method is below the critical concentration C* at which the coils of the thickener polymers start to overlap or entangle, whereby the concentration C of the associative thickener combination is defined as

$$C = \sum_i (W_i \times C_i)$$

with

$C_i$ = concentration of associative thickener i and
$W_i$ = weight fraction of associative thickener i in the associative thickener combination

and the critical concentration C* of the associative thickener combination is defined as

$$C^{\bullet} = \sum_i (W_i \times C_i^{\bullet})$$

with

$C_i^*$ = critical concentration of associative thickener i and
$W_i$ = weight fraction of associative thickener i in the associative thickener combination,

and whereby each $C_i^*$ can be calculated according to the Mark Houwink equation

$$C^* = \frac{2.5}{[\eta]}$$

$$\Phi * < h^2 >_h^{3/2} = [\eta] * M_v = K * M_v^{\alpha+1}$$

$$R_G = \left( \frac{< h^2 >_h}{6} \right)^{\frac{1}{2}}$$

wherein $[\eta]$ is the limiting viscosity number
$\Phi$ and K are proportionality constants
$<h^2>_h$ is the hydrodynamic equivalent mean square end to end distance of the polymer molecule
$M_v$ is the viscosity average molecular weight of the thickener
$\alpha$ is a constant and
$R_G$ is the radius of gyration,
with the proviso that if one or more polyurethane thickeners are present in the combination of associative thickeners, the total amount of polyurethane thickeners is not more than 90% based on the weight of the combination of associative thickeners.

2. Use according to claim 1, wherein the concentration of the combination of associative thickeners is below C*/2.5 = 1/$[\eta]$.

3. Use according to claim 1 or 2, wherein the binder system of the coating composition has particle sizes of about 700 nm or less.

4. Use according to claim 3, wherein the binder system of the coating composition has particle sizes of about 200 nm or less.

5. Use according to any of claims 3 or 5, wherein the binder system of the coating composition has particle sizes of about 100 nm or less.

6. Use according to any of claims 3 or 5, wherein the binder system of the coating composition has particle sizes of about 50 nm or above.

7. Use according to any of claims 1 to 6, wherein at least one associative thickener of the combination of associative thickeners is a carbohydrate based thickener.

8. Use according to any of claims 1 to 6, wherein at least one associative thickener of the combination of associative thickeners is a synthetic thickener.

**9.** Use according to claim 8, wherein the synthetic thickener is a hydrophobically modified PEG.

**10.** Use according to claim 7, wherein the carbohydrate based thickener is a cellulose based thickener.

**11.** Use according to any of claims 1 to 10, wherein at least one associative thickener of the combination of associative thickeners has a hydrophobe content of 0.5 wt % to 4 wt %.

**12.** Use according to any of claims 1 to 11, wherein the basic polymer of at least one associative thickener of the combination of associative thickeners is hydroxyethyl cellulose, hydroxypropyl cellulose, methyl cellulose, polyethyleneoxide, ethylhydroxylethyl cellulose, carboxymethyl cellulose, guar gum, starch, starch ethers, particularly hydroxyethyl starch, locust bean gum, pectin, xanthan gum, methylhydroxyethyl cellulose, polyvinylpyrolidone, polyvinyl alcohol, methylhydroxypropyl cellulose, mixed ethers of the above cellulose derivatives and mixtures thereof.

**13.** Use according to any of claims 1 to 12, wherein the combination of associative thickeners consists of two associative thickeners.

**14.** Use according to claim 13, wherein the combination of associative thickeners consists of two carbohydrate-based associative thickeners, a carbohydrate-based associative thickener/PEG-based associative thickener, a carbohydrate-based associative thickener/polyurethane thickener or a PEG-based associative thickener/polyurethane thickener.

**15.** Use according to claim 14, wherein the carbohydrate-based associative thickener is a $C_{10}$- to $C_{20}$-alkyl modified cellulose ether and the PEG-based associative thickener is a $C_{10}$- to $C_{20}$-alkyl modified poly(acetal-polyether).

**16.** Use according to any of claims 1 to 15, wherein the industrial coating is applied by conventional air spray techniques, HVLP (high volume low pressure) techniques or airless spray techniques.

**17.** Use according to any of claims 1 to 16, wherein the industrial coating is a coating for protection of transport vehicles, referred to as Transport Original Equipment Manufacturing (OEM), car refinish, anti-corrosion coating, maintenance coating or wood coating.

**18.** Aqueous protective coating composition having a viscosity which allows its application by industrial methods, containing a combination of associative thickeners and a binder system, wherein the binder system has a particle size of 50 nm to 700 nm, **characterized in that** at least one associative thickener which is present in the combination of associative thickeners is not a polyurethane thickener and that the combination of associative thickeners is present in a concentration C which is below the critical concentration C* at which the coils of the thickener polymers start to overlap or entangle, whereby the concentration C of the associative thickener combination is defined as

$$C = \sum_{i} (W_i \times C_i)$$

with

$C_i =$ concentration of associative thickener i and
$W_i =$ weight fraction of associative thickener i in the associative thickener combination

and the critical concentration C* of the associative thickener combination is defined as

$$C^* = \sum_{i} (W_i \times C_i^*)$$

with

$C_i^* =$ critical concentration of associative thickener i and

$w_i =$ weight fraction of associative thickener i in the associative thickener combination,

and whereby each $C_i^*$ can be calculated according to the Mark Houwink equation

$$C^* = \frac{2.5}{[\eta]}$$

$$\Phi * <h^2>_h^{3/2} = [\eta] * M_v = K * M_v^{\alpha+1}$$

$$R_G = \left(\frac{<h^2>_h}{6}\right)^{\frac{1}{2}}$$

wherein $[\eta]$ is the limiting viscosity number

$\Phi$ and K are proportionality constants

$<h^2>_h$ is the hydrodynamic equivalent mean square end to end distance of the polymer molecule

$M_v$ is the viscosity average molecular weight of the thickener

$\alpha$ is a constant and

$R_G$ is the radius of gyration,

with the proviso that if one or more polyurethane thickeners are present in the combination of associative thickeners, the total amount of polyurethane thickeners is not more than 90% based on the weight of the combination of associative thickeners.

19. Aqueous protective coating composition according to claim 18, wherein the concentration of the combination of associative thickeners is below $C^*/2.5 = 1/[\eta]$.

20. Aqueous protective coating composition according to claim 18 or 19, wherein the binder system of the coating composition has particle sizes of about 200 nm or less.

21. Aqueous protective coating composition according to claim 20, wherein the binder system of the coating composition has particle sizes of about 100 nm or less.

22. Aqueous protective coating composition according to any of claims 18 to 21, wherein at least one associative thickener of the combination of associative thickeners is a carbohydrate based thickener.

23. Aqueous protective coating composition according to any of claims 18 to 21, wherein at least one associative thickener of the combination of associative thickeners is a synthetic thickener.

24. Aqueous protective coating composition according to claim 23, wherein the synthetic thickener is a hydrophobically modified PEG.

25. Aqueous protective coating composition according to claim 22, wherein the carbohydrate based thickener is a cellulose based thickener.

26. Aqueous protective coating composition according to any of claims 18 to 25, wherein at least one associative thickener of the combination of associative thickeners has a hydrophobe content of 0.5 wt % to 4 wt %.

27. Aqueous protective coating composition according to any of claims 18 to 26, wherein the basic polymer of at least one associative thickener of the combination of associative thickeners is hydroxyethyl cellulose, hydroxypropyl cellulose, methyl cellulose, polyethyleneoxide, ethylhydroxylethyl cellulose, carboxymethyl cellulose, guar gum, starch, starch ethers, particularly hydroxyethyl starch, locust bean gum, pectin, xanthan gum, methylhydroxyethyl cellulose, polyvinylpyrolidone, polyvinyl alcohol, methylhydroxypropyl cellulose, mixed ethers of the above cellulose derivatives and mixtures thereof.

28. Aqueous protective coating composition according to any of claims 18 to 27, wherein the combination of associative thickeners consists of two associative thickeners.

**29.** Aqueous protective coating composition according to claim 28, wherein the combination of associative thickeners consists of two carbohydrate-based associative thickeners, a carbohydrate-based associative thickener/PEG-based associative thickener, a carbohydrate-based associative thickener/polyurethane thickener or a PEG-based associative thickener/polyurethane thickener.

**30.** Aqueous protective coating composition according to claim 29, wherein the carbohydrate-based associative thickener is a $C_{10}$- to $C_{20}$-alkyl modified cellulose ether and the PEG-based associative thickener is a $C_{10}$- to $C_{20}$-alkyl modified poly(acetal-polyether).

## Patentansprüche

**1.** Verwendung einer wässrigen Schutzbeschichtungszusammensetzung, die ein Bindemittelsystem und eine Kombination von assoziativen Verdickern enthält, für industrielle Beschichtungen, **dadurch gekennzeichnet, dass** mindestens einer der assoziativen Verdicker, der in der Kombination von assoziativen Verdickern vorhanden ist, kein Polyurethanverdicker ist und dass die Kombination von assoziativen verdickern so ausgewählt ist, dass die Konzentration der assoziativen Verdicker C, die erforderlich ist für die spezifische Auftragsmethode, unter der kritischen Konzentration C* liegt, bei der die Knäuel der Verdickerpolymere anfangen, sich zu überlappen oder sich zu verknäueln, wobei die Konzentration C der assoziativen Verdickerkombination definiert ist als

$$C = \sum_i (W_i \times C_i)$$

mit

$C_i =$  Konzentration des assoziativen Verdickers i und
$W_i =$  Gewichtsanteil des assoziativen Verdickers i in der assoziativen Verdickerkombination

und die kritische Konzentration C* der assoziativen Verdickerkombination definiert ist als

$$C^* = \sum_i (W_i \times C_i^*)$$

mit

$C_i^* =$  kritische Konzentration des assoziativen Verdickers i und
$W_i =$  Gewichtsanteil des assoziativen Verdickers i in der assoziativen Verdickerkombination

und wobei jedes $C_i^*$ mit der Mark-Houwink-Gleichung

$$C_i^* = \frac{2.5}{[\eta]}$$

$$\Phi * <h^2>_h^{3/2} = [\eta] * M_v = K * M_v^{\alpha+1}$$

$$R_G = \left(\frac{<h^2>_h}{6}\right)^{\frac{1}{2}}$$

berechnet werden kann, worin
$[\eta]$ die Grenzviskosität ist,
$\Phi$ und K Proportionalitätskonstanten sind
$<h^2>_h$ das hydrodynamische äquivalente mittlere Quadrat des Abstands von einem Ende des Polymermoleküls zum anderen ist

$M_v$ das viskositätsmittlere Molekulargewicht des Verdickers ist

$\alpha$ eine Konstante ist und

$R_G$ der Gyrationsradius ist,

mit dem Vorbehalt, dass dann, wenn einer oder mehrere Polyurethanverdicker in der Kombination von assoziativen Verdickern vorhanden sind, die Gesamtmenge an Polyurethanverdickern nicht mehr als 90% bezogen auf das Gewicht der Kombination an assoziativen Verdickern ist.

2. Verwendung nach Anspruch 1, wobei die Konzentration der Kombination von assoziativen Verdickern unter C*/ 2,5 = 1/[η] ist.

3. Verwendung nach Anspruch 1 oder Anspruch 2, wobei das Bindemittelsystem der Beschichtungszusammensetzung Teilchengrößen von etwa 700 nm oder weniger hat.

4. Verwendung nach Anspruch 3, wobei das Bindemittelsystem der Beschichtungszusammensetzung Teilchengrößen von etwa 200 nm oder weniger hat.

5. Verwendung nach einem der Ansprüche 3 oder 5, wobei das Bindemittelsystem der Beschichtungszusammensetzung Teilchengrößen von etwa 100 nm oder weniger hat.

6. Verwendung nach einem der Ansprüche 3 oder 5, wobei das Bindemittelsystem der Beschichtungszusammensetzung Teilchengrößen von etwa 50 nm oder mehr hat.

7. Verwendung nach einem der Ansprüche 1 bis 6, wobei mindestens ein assoziativer Verdicker der Kombination von assoziativen Verdickern ein auf Kohlenhydrat basierender Verdicker ist.

8. Verwendung nach einem der Ansprüche 1 bis 6, wobei mindestens ein assoziativer Verdicker der Kombination von assoziativen Verdickern ein synthetischer Verdicker ist.

9. Verwendung nach Anspruch 8, wobei der synthetische Verdicker ein hydrophob modifiziertes PEG ist.

10. Verwendung nach Anspruch 7, wobei der auf Kohlenhydrat basierende Verdicker ein auf Cellulose basierender Verdicker ist.

11. Verwendung nach einem der Ansprüche 1 bis 10, wobei mindestens ein assoziativer Verdicker der Kombination von assoziativen Verdickern einen Hydrophobanteil von 0,5 bis 4 Gew.-% hat.

12. Verwendung nach einem der Ansprüche 1 bis 11, wobei das Grundpolymer mindestens eines assoziativen Verdickers der Kombination von assoziativen Verdickern Hydroxyethylcellulose, Hydroxypropylcellulose, Methylcellulose, Polyethylenoxid, Ethylhydroxylethylcellulose, Carboxymethylcellulose, Guargummi, Stärke, Stärkeether, insbesondere Hydroxyethylstärke, Johannisbrotkernmehl, Pectin, Xanthangummi, Methylhydroxyethylcellulose, Polyvinylpyrrolidon, Polyvinylalkohol, Methylhydroxypropylcellulose, gemischter Ether der oben erwähnten Cellulosederivate oder eine Mischung davon ist.

13. Verwendung nach einem der Ansprüche 1 bis 12, wobei die Kombination von assoziativen Verdickern aus zwei assoziativen Verdickern besteht.

14. Verwendung nach Anspruch 13, wobei die Kombination von assoziativen Verdickern aus zwei auf Kohlenhydrat basierenden assoziativen Verdickern, einem auf Kohlenhydrat basierenden assoziativen Verdicker/auf PEG basierenden assoziativen Verdicker, einem auf Kohlenhydrat basierenden assoziativen Verdicker/Polyurethanverdicker oder einem auf PEG basierenden assoziativen Verdicker/Polyurethanverdicker besteht.

15. Verwendung nach Anspruch 14, wobei der auf Kohlenhydrat basierende assoziative Verdicker ein $C_{10}$-$C_{20}$-alkylmodifizierter Celluloseether ist und der auf PEG basierende assoziative Verdicker ein $C_{10}$-$C_{20}$-alkylmodifizierter Poly(acetalpolyether) ist.

16. Verwendung nach einem der Ansprüche 1 bis 15, wobei die industrielle Beschichtung mit üblichen Luftsprühtechniken, HVLP-(Hochvolumenniederdruck)-Techniken oder druckluftlosen Sprühtechniken aufgetragen wird.

**17.** Verwendung nach einem der Ansprüche 1 bis 16, wobei die industrielle Beschichtung eine Beschichtung zum Schutz für Transportfahrzeuge, die als Transport Original E-quipment Manufacturing (OEM) bezeichnet wird, Autonachbearbeitungsbeschichtung, Antikorrosionsbeschichtung, Pflegebeschichtung oder Holzbeschichtung ist.

**18.** Wässrige Schutzbeschichtungszusammensetzung mit einer Viskosität, die das Auftragen mit industriellen Methoden zulässt, die eine Kombination aus assoziativen Verdickern und einem Bindemittelsystem enthält, wobei das Bindemittelsystem eine Teilchengröße von 50 bis 700 nm hat, **dadurch gekennzeichnet, dass** mindestens ein assoziativer Verdicker, der in der Kombination assoziativer Verdicker vorhanden ist, kein Polyurethanverdicker ist und dass die Kombination von assoziativen Verdickern in einer Konzentration C vorhanden ist, die unter der kritischen Konzentration C* liegt, bei der die Knäuel der Verdickermoleküle beginnen, sich zu überlappen oder sich zu verknäueln, wobei die Konzentration C der assoziativen Verdickerkombination definiert ist als

$$C = \sum_i (W_i \times C_i)$$

mit

$C_i =$     Konzentration des assoziativen Verdickers i und
$W_i =$     Gewichtsanteil des assoziativen Verdickers i in der assoziativen Verdickerkombination

und die kritische Konzentration C* der assoziativen Verdickerkombination definiert ist als

$$C^* = \sum_i (W_i \times C_i^*)$$

mit

$C_i^* =$     kritische Konzentration des assoziativen Verdickers i und
$W_i =$     Gewichtsanteil des assoziativen Verdickers i in der assoziativen Verdickerkombination

und wobei jedes $C_i^*$ mit der Mark-Houwink-Gleichung

$$C_i^* = \frac{2.5}{[\eta]}$$

$$\Phi * <h^2>_h^{3/2} = [\eta] * M_v = K * M_v^{\alpha+1}$$

$$R_G = \left( \frac{<h^2>_h}{6} \right)^{1/2}$$

berechnet werden kann, worin
$[\eta]$ die Grenzviskosität ist,
$\Phi$ und K Proportionalitätskonstanten sind
$<h^2>_h$ das hydrodynamische äquivalente mittlere Quadrat des Abstands von einem Ende des Polymermoleküls zum anderen ist
$M_v$ das viskositätsmittlere Molekulargewicht des Verdickers ist
$\alpha$ eine Konstante ist und
$R_G$ der Gyrationsradius ist,
mit dem Vorbehalt, dass dann, wenn einer oder mehrere Polyurethanverdicker in der Kombination von assoziativen Verdickern vorhanden sind, die Gesamtmenge an Polyurethanverdicker nicht mehr als 90% bezogen auf das Gewicht der Kombination von assoziativen Verdickern ist.

**19.** Wässrige Schutzbeschichtungszusammensetzung nach Anspruch 18, wobei die Konzentration der Kombination von assoziativen Verdickern unter C\*/2,5 = 1/[η] ist.

**20.** Wässrige Schutzbeschichtungszusammensetzung nach Anspruch 18 oder Anspruch 19, wobei das Bindemittelsystem der Beschichtungszusammensetzung Teilchengrößen von etwa 200 nm oder weniger hat.

**21.** Wässrige Schutzbeschichtungszusammensetzung nach Anspruch 20, wobei das Bindemittelsystem der Beschichtungszusammensetzung Teilchengrößen von etwa 100 nm oder weniger hat.

**22.** Wässrige Schutzbeschichtungszusammensetzung nach einem der Ansprüche 18 bis 21, wobei mindestens ein assoziativer Verdicker der Kombination von assoziativen Verdickern ein auf Kohlenhydrat basierender Verdicker ist.

**23.** Wässrige Schutzbeschichtungszusammensetzung nach einem der Ansprüche 18 bis 21, wobei mindestens ein assoziativer Verdicker der Kombination von assoziativen Verdickern ein synthetischer Verdicker ist.

**24.** Wässrige Schutzbeschichtungszusammensetzung nach Anspruch 23, wobei der synthetische Verdicker ein hydrophob modifiziertes PEG ist.

**25.** Wässrige Schutzbeschichtungszusammensetzung nach Anspruch 22, wobei der auf Kohlenhydrat basierende Verdicker ein auf Cellulose basierender Verdicker ist.

**26.** Wässrige Schutzbeschichtungszusammensetzung nach einem der Ansprüche 18 bis 25, wobei mindestens ein assoziativer Verdicker der Kombination von assoziativen Verdickern einen Hydrophobanteil von 0,5 bis 4 Gew.-% hat.

**27.** Wässrige Schutzbeschichtungszusammensetzung nach einem der Ansprüche 18 bis 26, wobei das Grundpolymer mindestens eines assoziativen Verdickers der Kombination von assoziativen Verdickern Hydroxyethylcellulose, Hydroxypropylcellulose, Methylcellulose, Polyethylenoxid, Ethylhydroxylethylcellulose, Carboxymethylcellulose, Guargummi, Stärke, Stärkeether, insbesondere Hydroxyethylstärke, Johannisbrotkernmehl, Pektin, Xanthangummi, Methylhydroxyethylcellulose, Polyvinylpyrrolidon, Polyvinylalkohol, Methylhydroxypropylcellulose, gemischter Ether der oben erwähnten Cellulosederivate oder eine Mischung davon ist.

**28.** Wässrige Schutzbeschichtungszusammensetzung nach einem der Ansprüche 18 bis 27, wobei die Kombination von assoziativen Verdickern aus zwei assoziativen Verdickern besteht.

**29.** Wässrige Schutzbeschichtungszusammensetzung nach Anspruch 28, wobei die Kombination von assoziativen Verdickern aus zwei auf Kohlenhydrat basierenden assoziativen Verdickern, einem auf Kohlenhydrat basierenden assoziativen Verdicker/auf PEG basierenden assoziativen Verdicker, einem auf Kohlenhydrat basierenden assoziativen Verdicker/Polyurethanverdicker oder einem auf PEG basierenden assoziativen Verdicker/Polyurethanverdicker besteht.

**30.** Wässrige Schutzbeschichtungszusammensetzung nach Anspruch 29, wobei der auf Kohlenhydrat basierende assoziative Verdicker ein $C_{10}$-$C_{20}$-alkylmodifizierter Celluloseether ist und der auf PEG basierende assoziative Verdicker ein $C_{10}$-$C_{20}$-alkylmodifizierter Poly(acetalpolyether) ist.

**Revendications**

**1.** Utilisation d'une composition de revêtement de protection aqueuse contenant un système formant liant et une combinaison d'épaississants associatifs, pour des revêtements industriels, **caractérisée en ce qu'**au moins un des épaississants associatifs qui est présent dans la combinaison d'épaississants associatifs n'est pas un épaississant du type polyuréthanne et que la combinaison d'épaississants associatifs est choisie de telle sorte que la concentration C d'épaississants associatifs requise par la méthode d'application spécifique soit en dessous de la concentration critique C\* à laquelle les serpentins des polymères épaississants commencent à se superposer ou à s'enchevêtrer, la concentration C de la combinaison d'épaississants associatifs étant définie par

$$C = \sum_i (W_i \times C_i)$$

avec

$C_i =$ concentration de l'épaississant associatif i, et
$W_i =$ fraction pondérale de l'épaississant associatif i dans la combinaison d'épaississants associatifs,

et la concentration critique C* de la combinaison d'épaississants associatifs étant définie par

$$C^* = \sum_i (W_i \times C_i^*)$$

avec

$C_i^* =$ concentration critique de l'épaississant associatif i, et
$W_i =$ fraction pondérale de l'épaississant associatif i dans la combinaison d'épaississants associatifs,

et chaque $C_i^*$ pouvant être calculée suivant l'équation de Mark Houwink :

$$C_i^* = \frac{2.5}{[\eta]}$$

$$\Phi * <h^2>_h^{3/2} = [\eta] * M_v = K * M_v^{\alpha+1}$$

$$R_G = \left( \frac{<h^2>_h}{6} \right)^{\frac{1}{2}}$$

dans laquelle $[\eta]$ est l'indice de viscosité limite,
$\Phi$ et K sont des constantes de proportionnalité,
$<h^2>_h$ est la moyenne quadratique équivalente hydrodynamique de la distance d'une extrémité à l'autre de la molécule de polymère,
$M_v$ est le poids moléculaire moyen de viscosité de l'épaississant, $\alpha$ est une constante, et
$R_G$ est le rayon de giration,
à la condition que si un ou plusieurs épaississants du type polyuréthanne sont présents dans la combinaison d'épaississants associatifs, la quantité totale d'épaississants de polyuréthanne ne soit pas supérieure à 90% par rapport au poids de la combinaison d'épaississants associatifs.

2. Utilisation suivant la revendication 1, dans laquelle la concentration de la combinaison d'épaississants associatifs est en dessous de C*/2,5 = 1/$[\eta]$.

3. Utilisation suivant l'une ou l'autre des revendications 1 et 2, dans laquelle le système formant liant de la composition de revêtement a des tailles de particules d'environ 700 nm ou moins.

4. Utilisation suivant la revendication 3, dans laquelle le système formant liant de la composition de revêtement a des tailles de particules d'environ 200 nm ou moins.

5. Utilisation suivant l'une ou l'autre des revendications 3 et 4, dans laquelle le système formant liant de la composition de revêtement a des tailles de particules d'environ 100 nm ou moins.

6. Utilisation suivant l'une ou l'autre des revendications 3 et 5, dans laquelle le système formant liant de la composition de revêtement a des tailles de particules d'environ 50 nm ou plus.

7. Utilisation suivant l'une quelconque des revendications 1 et 6, dans laquelle au moins un épaississant associatif de la combinaison d'épaississants associatifs est un épaississant à base d'hydrate de carbone.

8. Utilisation suivant l'une quelconque des revendications 1 et 6, dans laquelle au moins un épaississant associatif de la combinaison d'épaississants associatifs est un épaississant synthétique.

9. Utilisation suivant la revendication 8, dans laquelle l'épaississant synthétique est un PEG modifié hydrophobiquement.

10. Utilisation suivant la revendication 7, dans laquelle l'épaississant à base d'hydrate de carbone est un épaississant à base de cellulose.

11. Utilisation suivant l'une quelconque des revendications 1 à 10, dans laquelle au moins un épaississant associatif de la combinaison d'épaississants associatifs a une teneur hydrophobe de 0,5 en poids à 4% en poids.

12. Utilisation suivant l'une quelconque des revendications 1 à 11, dans laquelle le polymère de base d'au moins un épaississant associatif de la combinaison d'épaississants associatifs est de l'hydroxyéthyl cellulose, hydroxypropyl cellulose, méthyl cellulose, oxyde de polyéthylène, éthylhydroxyéthyl cellulose, carboxyméthyl cellulose, gomme de guar, amidon, éther d'amidon, en particulier amidon hydroxyéthylé, gomme de caroube, pectine, gomme de xanthane, méthylhydroxyéthyl cellulose, polyvinylpyrrolidone, alcool polyvinylique, méthylhydroxypropyl cellulose, éthers mixtes des dérivés cellulosiques précités et leurs mélanges.

13. Utilisation suivant l'une quelconque des revendications 1 à 12, dans laquelle la combinaison d'épaississants associatifs se compose de deux épaississants associatifs.

14. Utilisation suivant la revendication 13, dans laquelle la combinaison d'épaississants associatifs se compose de deux épaississants associatifs à base d'hydrate de carbone, d'un épaississant associatif à base d'hydrate de carbone/épaississant associatif à base de PEG, d'un épaississant associatif à base d'hydrate de carbone/épaississant du type polyuréthanne ou d'un épaississant associatif à base de PEG/épaississant du type polyuréthanne.

15. Utilisation suivant la revendication 14, dans laquelle l'épaississant associatif à base d'hydrate de carbone est un éther cellulosique modifié par alkyle en $C_{10}$ à $C_{20}$ et l'épaississant associatif à base de PEG est un poly(acétal-polyéther) modifié par alkyle en $C_{10}$ à $C_{20}$.

16. Utilisation suivant l'une quelconque des revendications 1 à 15, dans laquelle le revêtement industriel est appliqué par des techniques de pulvérisation pneumatique conventionnelles, des techniques HVLP (à basse pression et volume élevé) ou des techniques de pulvérisation sans air.

17. Utilisation suivant l'une quelconque des revendications 1 à 16, dans laquelle le revêtement industriel est un revêtement pour la protection de véhicules de transport, dans le cadre de la Fabrication d'Equipements d'Origine de Transport (OEM), une retouche de voiture, un revêtement anticorrosion, un revêtement d'entretien ou un revêtement en bois.

18. Composition de revêtement aqueuse ayant une viscosité qui permet son application par des méthodes industrielles, contenant un combinaison d'épaississants associatifs et un système formant liant, dans laquelle le système formant liant a une taille de particule de 50 nm à 700 nm, **caractérisée en ce qu'**au moins un épaississant associatif qui est présent dans la combinaison d'épaississants associatifs n'est pas un épaississant du type polyuréthanne et que la combinaison d'épaississants associatifs est présente en une concentration C qui est en dessous de la concentration critique C* à laquelle les serpentins des polymères épaississants commencent à se superposer ou s'enchevêtrer, la concentration C de la combinaison d'épaississants associatifs étant définie par

$$C = \sum_i (W_i \times C_i)$$

avec

$C_i$ = concentration de l'épaississant associatif i, et

$W_i =$ fraction pondérale de l'épaississant associatif i dans la combinaison d'épaississants associatifs,

et la concentration critique C* de la combinaison d'épaississants associatifs étant définie par

$$C^* = \sum_i (W_i \times C_i^*)$$

avec

$C_i^* =$ concentration critique de l'épaississant associatif i, et
$W_i =$ fraction pondérale de l'épaississant associatif i dans la combinaison d'épaississants associatifs,

et chaque $C_i^*$ pouvant être calculée suivant l'équation de Mark Houwink :

$$C_i^* = \frac{2.5}{[\eta]}$$

$$\Phi * <h^2>_h^{3/2} = [\eta] * M_v = K * M_v^{\alpha+1}$$

$$R_G = \left(\frac{<h^2>_h}{6}\right)^{\frac{1}{2}}$$

dans laquelle [η] est l'indice de viscosité limite,
Φ et K sont des constantes de proportionnalité,
$<h^2>_h$ est la moyenne quadratique équivalente hydrodynamique de la distance d'une extrémité à l'autre de la molécule de polymère,
$M_v$ est le poids moléculaire moyen de viscosité de l'épaississant, α est une constante, et
$R_G$ est le rayon de giration,
à la condition que si un ou plusieurs épaississants du type polyuréthanne sont présents dans la combinaison d'épaississants associatifs, la quantité totale d'épaississants de polyuréthanne ne soit pas supérieure à 90% par rapport au poids de la combinaison d'épaississants associatifs.

19. Composition de revêtement de protection aqueuse suivant la revendication 18, dans laquelle la concentration de la combinaison d'épaississants associatifs est en dessous de C*/2,5 = 1/[η].

20. Composition de revêtement de protection aqueuse suivant l'une ou l'autre des revendications 18 et 19, dans laquelle le système formant liant de la composition de revêtement a des tailles de particules d'environ 200 nm ou moins.

21. Composition de revêtement de protection aqueuse suivant la revendication 20, dans laquelle le système formant liant de la composition de revêtement a des tailles de particules d'environ 100 nm ou moins.

22. Composition de revêtement de protection aqueuse suivant t'une quelconque des revendications 18 à 21, dans laquelle au moins un épaississant associatif de la combinaison d'épaississants associatifs est un épaississant à base d'hydrate de carbone.

23. Composition de revêtement de protection aqueuse suivant l'une quelconque des revendications 18 et 21, dans laquelle au moins un épaississant associatif de la combinaison d'épaississants associatifs est un épaississant synthétique.

24. Composition de revêtement de protection aqueuse suivant la revendication 23, dans laquelle l'épaississant synthétique est un PEG modifié hydrophobiquement.

25. Composition de revêtement de protection aqueuse suivant la revendication 22, dans laquelle l'épaississant à base d'hydrate de carbone est un épaississant à base de cellulose.

26. Composition de revêtement de protection aqueuse suivant l'une quelconque des revendications 18 à 25, dans laquelle au moins un épaississant associatif de la combinaison d'épaississants associatifs a une teneur hydrophobe de 0,5 en poids à 4% en poids.

27. Composition de revêtement de protection aqueuse suivant l'une quelconque des revendications 18 à 26, dans laquelle le polymère de base d'au moins un épaississant associatif de la combinaison d'épaississants associatifs est de l'hydroxyéthyl cellulose, hydroxypropyl cellulose, méthyl cellulose, oxyde de polyéthylène, éthylhydroxyéthyl cellulose, carboxyméthyl cellulose, gomme de guar, amidon, éther d'amidon, en particulier amidon hydroxyéthylé, gomme de caroube, pectine, gomme de xanthane, méthylhydroxyéthyl cellulose, polyvinylpyrrolidone, alcool polyvinylique, méthylhydroxypropyl cellulose, éthers mixtes des dérivés cellulosiques précités et leurs mélanges.

28. Composition de revêtement de protection aqueuse suivant l'une quelconque des revendications 18 à 27, dans laquelle la combinaison d'épaississants associatifs se compose de deux épaississants associatifs.

29. Composition de revêtement de protection aqueuse suivant la revendication 28, dans laquelle la combinaison d'épaississants associatifs se compose de deux épaississants associatifs à base d'hydrate de carbone, d'un épaississant associatif à base d'hydrate de carbone/épaississant associatif à base de PEG, d'un épaississant associatif à base d'hydrate de carbone/épaississant du type polyuréthanne ou d'un épaississant associatif à base de PEG/épaississant du type polyuréthanne.

30. Composition de revêtement de protection aqueuse suivant la revendication 29, dans laquelle l'épaississant associatif à base d'hydrate de carbone est un éther cellulosique modifié par alkyle en $C_{10}$ à $C_{20}$ et l'épaississant associatif à base de PEG est un poly(acétal-polyéther) modifié par alkyle en $C_{10}$ à $C_{20}$.